# EUROPEAN PATENT APPLICATION

(11) **EP 4 082 652 A1**
(43) Date of publication of application: **02.11.2022**
(21) Application number: 21171513.1
(22) Date of filing: 30.04.2021
(51) Int. Cl.: B01D 61/44, B01D 61/46

(54) **ELECTRODIALYSIS DEVICE**

(71) Applicant: MEIKO Maschinenbau GmbH & Co. KG, 77652 Offenburg (DE)
(72) Inventor: Dürrse, Carsten, 77955 Ettenheim (DE); Gaus, Bruno, 77654 Offenburg (DE); van Linden, Niels, 3038 JE Rotterdam (NL); Schepers, Freek, 3743 EH Baarn (NL)
(74) Representative: Altmann Stößel Dick Patentanwälte PartG mbB

(57) **Abstract**

The present invention relates to an electrodialysis device (1110) for simultaneously producing an aqueous stream (B1) comprising an alkali metal hydroxide and an aqueous stream (A1) comprising a Bronsted acid and a process for simultaneously producing an aqueous stream (B1) comprising an alkali metal hydroxide and an aqueous stream (A1) comprising a Bronsted acid wherein the process is carried out in said electrodialysis device (1110).

## Description

### Technical Field

The present invention relates to an electrodialysis device for simultaneously producing an aqueous stream comprising an alkali metal hydroxide MOH and an aqueous stream comprising a Bronsted acid HA and a process for simultaneously producing an aqueous stream comprising an alkali metal hydroxide MOH and an aqueous stream comprising a Bronsted acid HA, the process being carried out in the electrodialysis device. Devices of said kind may be used, in particular, in the field of chemical engineering, specifically for converting salts into alkaline and acidic solutions that may be used for cleaning, water treatment, deliming, metal pre-treatment and other fields of use. Other fields of use are also possible in principle.

### Background art

In the field of chemical engineering such as in large chemical plants, various devices and apparatuses are known for manufacturing solid or liquid chemicals such as alkali materials. As an example, for manufacturing acidic or alkaline materials in chemical plants, electrolysis methods are generally known in the field of chemical engineering.

WO 2016/162327 A1 and FR 3 034 689 A1 describe an electrolytic cell for producing at least one chemical substance, in particular selected from dihydrogen, dioxygen, halides, in particular chlorine or bromine, acids, in particular hypochlorous acid HClO, the hypochlorite ion ClO-, hydrochloric acid HCl or bases, in particular sodium hydroxide NaOH, by electrolysis of an electrolyte, the electrolyte possibly being water containing at least one salt, one base and/or one acid, in particular selected from the following list: NaCl, KCl, MgCl₂, CaCl₂, CuSO₄, FeSO₄, NaNO₃, KNO₃, Na₂SO₄, K₂SO₄, Cd(CN)₂, Cu(CN)₂, Ag(CN), Zn(CN), CuCl₂, Cu(OH)₂, Ni(OH)₂, NiCl₂, ZnCl₂, ZnSO₄, Zn(OH)₂, Pb(NO₃)₂, CdCl₂, Cd(OH)₂, the electrolytic cell comprising: an anodic side chamber and an anode; a cathodic side chamber and a cathode; at least two ion exchange membranes positioned between the anode and the cathode; and at least one intermediate chamber arranged between the two ion exchange membranes, the intermediate chamber being fed with electrolyte by hydraulic inlet and outlet connectors positioned at the periphery of the cell, in particular being positioned on the same side of the cell or on either side thereof.

Further, WO 2012/129735 A1 and US 2014/0014145 A1 describe an electrolysis device for producing alkaline water from water including an electrolysis vessel, a positive electrode, a negative electrode, a bipolar membrane element, and at least one cation exchangeable membrane within the electrolysis vessel. The bipolar membrane element has a cation exchangeable side and an anion exchangeable side, the cation exchangeable side being closer to the negative electrode than the anion exchangeable side. The at least one cation exchangeable membrane is arranged between the anion exchangeable side of the bipolar membrane element and the positive electrode, so as to define an alkali chamber between the bipolar membrane element and the cation exchangeable membrane. An ionic exchange resin is associated with the vessel, whereby flow of the water though the vessel and the ionic exchange resin produces alkaline water in the alkali chamber. Various options and modifications are possible. A related washing machine such as a dishwasher is also disclosed.

US 4,536,269 A discloses an apparatus for generating an acidified aqueous salt solution and an aqueous base in a multichamber two-compartment electrodialytic water splitter which comprises alternating bipolar and first cation permselective membranes and at least one additional substantially non-porous, water-swollen cation permselective or neutral membrane disposed between a cation face of the bipolar membrane and a face of said first cation membrane thereby defining at least two acid compartments and a base compartment positioned between an anode and a cathode. The method comprises the steps of: (a) introducing a liquid comprising water to the base compartment; (b) introducing a liquid comprising an aqueous soluble salt to a first acid compartment adjacent the base compartment; (c) serially transferring the liquid comprising the aqueous soluble salt from the first acid compartment to a second acid compartment adjacent the first acid compartment; (d) passing direct current through said water splitter thereby adding hydrogen ions to the first and second acid compartments, metal cations from the acid compartments to the base compartment, and adding hydroxide ions to the liquid comprising water in the base compartment; (e) withdrawing a liquid comprising aqueous base from the base compartment; and (f) withdrawing an acidified aqueous soluble salt from the second acid compartment.

US 4,608,141 A describes a method of generating a basified aqueous salt solution and an aqueous acid in a multichamber two-compartment electrodialytic water splitter having unit cells comprised of a bipolar membrane, a first anion permselective membrane and at least one additional substantially non-porous, water-swollen non-cation permselective membrane disposed between an anion face of the bipolar membrane and a face of said first anion membrane thereby forming at least two base compartments and an acid compartment, positioned between an anode and a cathode. The method comprises the steps of: (a) introducing a liquid comprising water to an acid compartment formed by a cation face of a bipolar membrane and a face of said first anion membrane; (b) introducing a liquid comprising an aqueous soluble salt to a first base compartment formed by a face of said first anion membrane and a face of said at least one additional non-cation permselective membrane; (c) serially transferring the liquid comprising the aqueous soluble salt from said first base compartment to the additional base compartment formed by a face of said at least one additional non-cation permselective membrane and an anion face of a bipolar membrane; (d) passing direct current through said water splitter thereby adding hydroxyl ions to the additional base compartment, transferring hydroxyl ions through said at least one non-cation permselective membrane from the additional base compartment to the said first base compartment, anions from the first base compartments to the acid compartment, and adding hydrogen ions to the liquid comprising water in the acid compartment; (e) withdrawing a liquid comprising aqueous acid from the acid compartment; and (f) withdrawing a basified aqueous soluble salt from the additional base compartment.

US 5,135,626 A discloses a method of recovery of base from material comprising base or acid and salt. The method is conducted in an apparatus comprising a cation membrane between two bipolar membranes.

US 5,198,086 A discloses a method and related apparatus useful to electrodialytically convert the salt of a strong base and a weak acid to base with improved purity; or the salt of a weak base and a strong acid to acid with improved purity.

US 2019/0276940 A1 discloses an electro-chemical activation (ECA) system including an anode chamber, a cathode chamber, and a neutralization chamber. The anode chamber includes an anode configured to convert water having an alkaline-metal chloride into an anodic electrolyte that includes hypochlorous acid. The cathode chamber includes a cathode configured to convert water into a cathodic electrolyte. The neutralization chamber includes a neutralization cathode configured to remove protons from the anodic electrolyte after it leaves the anode chamber. The ECA system is configured to recirculate the anodic electrolyte back through the anode chamber and the neutralization chamber at least one more time to produce a concentrated chlorine solution. The ECA system is further configured to recirculate the cathodic electrolyte back through the cathode chamber at least one additional time to produce a concentrated alkaline solution.

N. Linden, G. L. Bandinu, D. A. Vermaas, H. Spanjers, and J. B. van Lier: "Bipolar membrane electrodialysis for energetically competitive ammonium removal and dissolved ammonia production", Journal of Cleaner Production 2020, volume 259, 120788, discloses a process using bipolar membrane electrodialysis to remove ammonium from water and to simultaneously produce concentrated dissolved ammonia, without using chemicals.

AT 399 721 B describes a process for obtaining citric acid. In the process, solutions of organic acids, such as solutions of organic acids produced by fermentation and possibly also containing other constituents such as biomass, oxalic acid, gluconic acid etc., are filtered, such as by overflow filtration, and then treated in several steps consisting of raising and lowering the pH and removing various constituents by means of electrodialysis. By using electrodialysis with bipolar membranes, the required chemicals for raising and lowering the pH are circulated. To improve the purity of citric acid, it is possible to employ selective cation or anion exchange membranes.

US 5,194,130 A describes a method and an apparatus of electodialytically treating an acid such as citric acid to produce a desired salt of the anion of the acid, such as sodium citrate. A cation can be introduced into a solution via a cheap donor salt solution such as NaCl or KCl, without significantly altering or degrading the purity of the final product. The apparatus comprises a three-compartment cell, which comprises at least two adjacent anion selective membranes to accomplish a cation substitution reaction exploiting the differential selectivities of the adjacent anion membranes employed.

X. Tongwen and Y. Weihua describe in "Citric acid production by electrodialysis with bipolar membranes", Chemical Engineering and Processing 2002, volume 41, issue 6, pages 519 to 524, a production of citric acid from sodium citrate by means of electrodialysis, using bipolar membranes prepared from poly(phenylene oxide).

Despite the advantages achieved by the known methods and devices, several technical challenges remain. Specifically, it may be challenging to use salts having a high molecular size, such as sodium citrate or similar molecules, in electrolysis methods. It is generally known that permeation of acidic molecules having high molecular sizes through ion-selective membranes is strongly reduced. Thus, separating such ions of high molecular size in electrolysis methods may be highly challenging, thereby affecting efficiency of these methods, specifically for producing acidic and/or alkaline materials. Further, dangerous gases, such as chlorine gas and/or other chlorine compounds, are generally produced during electrolysis methods resulting in significant safety risks.

### Problem to be solved

It is therefore desirable to provide an electrodialysis device and a process which at least largely address the above-mentioned technical challenges of known devices and methods. Specifically, an electrodialysis device and a process shall be proposed which allow efficiently and simultaneously producing an aqueous stream comprising an alkali metal hydroxide MOH and an aqueous stream comprising a Bronsted acid HA while ensuring high safety standards, specifically with respect to the safety of operating staff and environmental standards.

### Summary

This problem is addressed by an electrodialysis device and a process for simultaneously producing an aqueous stream comprising an alkali metal hydroxide MOH and an aqueous stream comprising a Bronsted acid HA with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, an electrodialysis device for simultaneously producing an aqueous stream comprising an alkali metal hydroxide MOH and an aqueous stream comprising a Bronsted acid HA is disclosed. The electrodialysis device comprises a cathode arranged in a cathode chamber, an anode arranged in an anode chamber, and a bipolar membrane stack arranged between the anode chamber and the cathode chamber. The bipolar membrane stack comprises x cell arrays, i=1...x, arranged in series between the cathode chamber and the anode chamber, wherein each cell array consists of y cells, k=1...y, and is defined by a first cation exchange membrane at the cathode side of the cell array, a second cation exchange membrane at the anode side of the cell array and a bipolar membrane arranged between the first cation exchange membrane and the second cation exchange membrane. A cell which is defined by the bipolar membrane and the second cation exchange membrane comprises inlet means for passing an aqueous stream into said cell and outlet means for removing an aqueous stream comprising MOH from said cell. A cell which is defined at its cathode side by the first cation exchange membrane comprises inlet means for passing an aqueous stream comprising an alkali metal salt MA of the acid HA, into said cell. A cell which is defined at its anode side by the bipolar membrane comprises outlet means for removing an aqueous stream comprising HA from said cell. The bipolar membrane stack comprises:
- inlet means for passing an aqueous stream to the membrane stack; and outlet means for removing the aqueous stream comprising MOH from said membrane stack;
- inlet means for passing an aqueous stream comprising MA to the membrane stack; and outlet means for removing the aqueous stream comprising HA from said membrane stack.
Further, y is 2 or 3 and x ≥ 1.

The term "electrodialysis device", also referred to as a "bipolar membrane electrodialysis device", as used herein is a broad term and is to be given its ordinary and customary meaning to a person of ordinary skill in the art and is not to be limited to a special or customized meaning. The term specifically may refer, without limitation, to a device configured for performing bipolar membrane electrodialysis. Thus, the electrodialysis device may comprise at least two electrodes for applying an electric field and at least one bipolar membrane disposed in between the electrodes, as well as, optionally, at least one further membrane selected from the group consisting of a cation exchange membrane and an anion exchange membrane. The membranes, specifically, may separate different cells of the bipolar membrane electrodialysis device, and the electric field may be applicable, by the electrodes, across the cells. The bipolar membrane electrodialysis device may specifically comprise the bipolar membrane stack arranged in between the at least two electrodes. The bipolar membrane electrodialysis may be performed in the bipolar membrane stack of the electrodialysis device. However, the electrodialysis device may be described in further detail below. Thus, possible embodiments of the electrodialysis device will be described in further detail below.

The term "bipolar membrane electrodialysis" as used herein is a broad term and is to be given its ordinary and customary meaning to a person of ordinary skill in the art and is not to be limited to a special or customized meaning. The term specifically may refer, without limitation, to a process of separating components of at least one electrolytic liquid, specifically of an aqueous medium and/or an aqueous solution of at least one salt, specifically for separating cations and anions of the at least one salt comprised by the aqueous medium, by using a combination of an electrical field and at least one membrane, the at least one membrane comprising the at least one bipolar membrane (BPM) and optionally also at least one further membrane selected from the group consisting of a cation exchange membrane (CEM) and an anion exchange membrane (AEM). The membranes, specifically, may separate different cells of the electrodialysis device, also referred to as a bipolar membrane electrodialysis device, and the electric field may be applied across the cells and may drive both the separation of the ions and the permeation and/or transport of the ions at the respective membranes and/or through the respective membranes. The separation and transport of the ions induced by the applied electric field may yield cations in specific cells of the electrodialysis device and anions in cells being different from the cell of accumulated cations. Specifically, cations may be transported through cation exchange membranes, whereas anions may be transported through anion exchange membranes, as will be outlined in further detail below. The separation of cations and anions of the at least one salt may be driven by the electric field. Thus, the separation of ions may be driven electrically and specifically may be performed without applying any external fluidic pressure to the aqueous medium, specifically to the aqueous medium comprising the salt or any other fluids, as opposed e.g. to other separation techniques such as reverse osmosis. Consequently, the electrodialysis device may constructively be designed for low-pressure applications, without the necessity of providing for a pump for the separation process. Further, the separation of ions may be driven electrically, wherein an electric process may easily be controlled.

As a consequence of the separation of ions, the bipolar membrane electrodialysis may further involve a conversion of the aqueous medium comprising the alkali metal salt MA of the acid HA into the aqueous medium comprising the Bronsted acid HA and a conversion of the additional aqueous medium, such as water, into the aqueous medium comprising the alkali metal hydroxide MOH. Specifically, the bipolar membrane electrodialysis may comprise at least two conversion reactions, wherein the two conversion reactions may be performed separate from each other in two different cells of the electrodialysis device, the cells being separated by at least one of the membranes as mentioned above. The bipolar membrane electrodialysis may comprise at least one first conversion reaction to form the aqueous medium comprising MOH, wherein the first conversion reaction may comprise an interaction of the cation of the at least one salt with at least one hydroxide ion, and at least one second conversion reaction to form the aqueous medium comprising the acid, wherein the second conversion reaction may comprise an interaction of the anion of the at least one salt with at least one hydrogen cation.

The term "producing" as used herein is a broad term and is to be given its ordinary and customary meaning to a person of ordinary skill in the art and is not to be limited to a special or customized meaning. The term specifically may refer, without limitation, to an action of preparing, synthesizing, converting or transforming at least one reactant into at least one product. Specifically, producing the aqueous stream comprising the alkali metal hydroxide MOH and the aqueous stream comprising the Bronsted acid HA may comprise performing the bipolar membrane electrodialysis by which, as outlined above, the aqueous stream comprising MA may be converted into the aqueous stream comprising HA and the aqueous stream may be converted into the aqueous stream comprising MOH. As used herein, the term "simultaneously producing" is a broad term and is to be given its ordinary and customary meaning to a person of ordinary skill in the art and is not to be limited to a special or customized meaning. The term specifically may refer, without limitation, to a producing of two or more products, wherein the actions for producing the at least two products may at least partially be performed in a timely overlapping fashion. The simultaneous production of the aqueous stream comprising HA and of the aqueous stream comprising MOH, specifically by performing the bipolar membrane electrodialysis, may be performed in a timely overlapping fashion.

The term "aqueous stream" as used herein is a broad term and is to be given its ordinary and customary meaning to a person of ordinary skill in the art and is not to be limited to a special or customized meaning. The term specifically may refer, without limitation, to a fluidic steam at least partially comprising water. Specifically, the term "aqueous stream" may refer to a stream of an aqueous medium, such as water, wherein the aqueous medium may further comprise one or more additional substances, such as one or more of the alkali metal salt, the alkali metal hydroxide or the Bronsted acid. In the context of the present invention, the term "alkali metal salt MA of the acid HA" may also be referred to as the "alkali metal salt" or simply the "salt", also denoted as "MA". Similarly, the term "alkali metal hydroxide MOH" may be referred to as "MOH". The term "Bronsted acid HA" may simply be referred to as the "acid" or "HA".

As outlined above, the electrodialysis device comprises the cathode arranged in the cathode chamber, the anode arranged in the anode chamber, and the bipolar membrane stack arranged between the anode chamber and the cathode chamber. The term "cathode" as used herein is a broad term and is to be given its ordinary and customary meaning to a person of ordinary skill in the art and is not to be limited to a special or customized meaning. The term specifically may refer, without limitation, to an electrically conducting element, device or electrode which, when an electric voltage is applied thereto, attracts cations. The cathode may specifically be the electrode to which, during bipolar membrane electrodialysis, a negative electric potential is applied. The cathode may specifically be accommodated in the cathode chamber such that the cathode contacts an aqueous electrolyte stream passed through the cathode chamber. Consequently, the term "cathode chamber" as used herein is a broad term and is to be given its ordinary and customary meaning to a person of ordinary skill in the art and is not to be limited to a special or customized meaning. The term specifically may refer, without limitation, to an element configured for holding or for accommodating the cathode. The cathode chamber may be configured for passing an aqueous electrolyte stream therethrough. Similarly, the term "anode" as used herein is a broad term and is to be given its ordinary and customary meaning to a person of ordinary skill in the art and is not to be limited to a special or customized meaning. The term specifically may refer, without limitation, to an electrically conducting element, device or electrode which, when an electric voltage is applied thereto, attracts anions. The anode may specifically be the electrode to which, during bipolar membrane electrodialysis, a positive electric potential is applied. The anode may specifically be accommodated in the anode chamber such that the anode contacts an aqueous electrolyte stream passed through the anode chamber. Consequently, the term "anode chamber" as used herein is a broad term and is to be given its ordinary and customary meaning to a person of ordinary skill in the art and is not to be limited to a special or customized meaning. The term specifically may refer, without limitation, to an element configured for holding or for accommodating the anode. The anode chamber may be configured for passing an aqueous electrolyte stream therethrough.

The term "bipolar membrane stack", also referred to as "membrane stack", as used herein is a broad term and is to be given its ordinary and customary meaning to a person of ordinary skill in the art and is not to be limited to a special or customized meaning. The term specifically may refer, without limitation, to a plurality or sequence of neighboring cells, wherein the cells are separated by at least one membrane, specifically at least one membrane selected from the group consisting of a cation exchange membrane, an anion exchange membrane and a bipolar membrane. Specifically, the bipolar membrane stack may comprise a sequence of at least two cells being separated by the bipolar membrane. The bipolar membrane stack may comprise a plurality of cells, wherein the plurality cells may be arranged sequentially one after another and may be separated by a membrane selected from the group consisting of a cation exchange membrane, an anion exchange membrane and a bipolar membrane.

As outlined above, the bipolar membrane stack comprises x cell arrays, i=1...x, arranged in series between the cathode chamber and the anode chamber, wherein each cell array consists of y cells, k=1...y, and is defined by the first cation exchange membrane at the cathode side of the cell array, the second cation exchange membrane at the anode side of the cell array and the bipolar membrane arranged between the first cation exchange membrane and the second cation exchange membrane.

The term "cell array" as used herein is a broad term and is to be given its ordinary and customary meaning to a person of ordinary skill in the art and is not to be limited to a special or customized meaning. The term specifically may refer, without limitation, to a grouped sequence of y cells, wherein y is 2 or 3. Specifically, the cells in the cell array may be grouped coplanar with respect to each other. The cells within each cell array may be separated by the bipolar membrane and, optionally, by a membrane selected from the group consisting of a cation exchange membrane (CEM) and an anion exchange membrane (AEM). For example, in case y is 2, the two cells of the cell array may be separated only by the bipolar membrane. As another example, in case y is 3, two cells of the cell array may be separated by the bipolar membrane, wherein the third cell may be separated by another membrane, such as by an anion exchange membrane. As outlined above, the bipolar membrane stack may comprise a plurality of cell arrays. The cell arrays comprised by the bipolar membrane stack may be separated from each other and/or from the cathode chamber or the anode chamber by cation exchange membranes and/or anion exchange membranes.

The term "cell" as used herein is a broad term and is to be given its ordinary and customary meaning to a person of ordinary skill in the art and is not to be limited to a special or customized meaning. The term specifically may refer, without limitation, to a cavity located in between two membranes, wherein the cavity may be configured for receiving a fluid. Specifically, the cell may comprise an open cavity such that a stream of the aqueous medium may be passed through the cell. The bipolar membrane electrodialysis may be performed in the cells of the bipolar membrane stack, wherein the first conversion reaction and the second conversion reaction may be performed in at least two distinct cells. Specifically, the first conversion reaction of the bipolar membrane electrodialysis may be performed in the cell defined by the bipolar membrane at its cathode side and the cation exchange membrane at its anode side. The second conversion reaction of the bipolar membrane electrodialysis may be performed in the cell defined by the bipolar membrane at its anode side.

The cells comprised by the cell array may be separated from each other by at least one spacer. The spacer may specifically refer to a structural element arranged in between the two membranes of the cell and enabling passing a fluidic stream through the cell. The spacer in between two membranes may specifically form the cavity through which the respective fluid is passed. The spacer may be configured for providing fluidic sealing of the cell. As an example, the spacer may be or may comprise at least one mesh arranged in between the two membranes of the cell.

The term "cation exchange membrane" as used herein is a broad term and is to be given its ordinary and customary meaning to a person of ordinary skill in the art and is not to be limited to a special or customized meaning. The term specifically may refer, without limitation, to an ion-selective membrane allowing for permeation of at least one species of cations, whereas permeation of anions through the membrane is prevented. Specifically, a cation exchange membrane enabling ion exchange, specifically cation exchange, may allow ion transport, specifically cationic transport, through the membrane. The cation exchange membrane may be a single layer or a layer setup being permeable for at least one species of cations and impermeable to anions. Similarly, the term "anion exchange membrane" as used herein is a broad term and is to be given its ordinary and customary meaning to a person of ordinary skill in the art and is not to be limited to a special or customized meaning. The term specifically may refer, without limitation, to an ion-selective membrane allowing for permeation of at least one species of anions, whereas permeation of cations through the membrane is prevented. Specifically, an anion exchange membrane enabling ion exchange, specifically anion exchange, may allow ion transport, specifically anionic transport, through the membrane. The anion exchange membrane may be a single layer or a layer setup being permeable for at least one species of anions and impermeable to cations. Exemplary materials for cation exchange membranes and anion exchange membrane are described in further detail below.

The term "bipolar membrane" as used herein is a broad term and is to be given its ordinary and customary meaning to a person of ordinary skill in the art and is not to be limited to a special or customized meaning. The term specifically may refer, without limitation, to a membrane layer setup, specifically a laminated layer setup, comprising at least one membrane layer that is only permeable for anions (anion exchange layer or anion exchange membrane) and at least one further membrane layer permeable only for cations (cation exchange layer or cation exchange membrane). However, bipolar membrane comprising other than laminated layer setups are also feasible. The layer setup, specifically a bilayer setup, may be preferred. The layers, as an example, may comprise polymer membrane layers, as will be outlined in further detail below. The layer permeable for anions only and the layer permeable for cations only may be in direct contact or may be linked via at least one intermediate layer. During bipolar membrane electrodialysis, an electrically driven separation of cations and anions typically takes place at the bipolar junction of the bipolar membrane, where the anion and the cation permeable layers are in direct contact, or at the interfaces between the cation exchange layer and the intermediate layer and between the anion exchange layer and the intermediate layer, respectively. Specifically, during bipolar membrane electrodialysis, the applied electric field may drive dissociation of water at the bipolar junction of the bipolar membranes. The water may dissociate in protons (H⁺) and in hydroxide ions (OH⁻) at the bipolar junction of the bipolar membrane. Thus, the cations permeating through the cation permeable layer of the bipolar membrane may comprise protons (H⁺), wherein the anions permeating through the anion permeable layer of the bipolar membrane may comprise hydroxide ions (OH⁻).

Specifically, the bipolar membrane may comprise at least one first layer allowing ions of one kind of charge to migrate through the first layer, and at least one second layer allowing ions of the other kind of charge to migrate through the second layer. Thus, the bipolar membrane may allow migration of ions of both kind of charges, wherein ions of one kind may migrate through the first layer in a first direction and ions of the other kind may migrate through the second layer in a second direction opposing the first direction. For example, the at least one first layer may comprise a cation exchange membrane, wherein the cation exchange membrane may allow migration of cations, specifically protons (H⁺), through the cation exchange membrane and may prevent migration of anions, and the at least one second layer may comprise an anion exchange membrane, wherein the anion exchange membrane may allow migration of anions, specifically hydroxide ions (OH⁻), through the anion exchange membrane and may prevent migration of cations. The at least one first layer, specifically the cation exchange membrane, may be arranged on a cathode side of the bipolar membrane and the at least one second layer, specifically the anion exchange membrane, may be arranged an anode side of the bipolar membrane.

The term "cathode side" as used herein is a broad term and is to be given its ordinary and customary meaning to a person of ordinary skill in the art and is not to be limited to a special or customized meaning. The term specifically may refer, without limitation, to an orientation of a side of a device or a membrane facing the cathode of the electrodialysis device. Similarly, the term "anode side" as used herein is a broad term and is to be given its ordinary and customary meaning to a person of ordinary skill in the art and is not to be limited to a special or customized meaning. The term specifically may refer, without limitation, to an orientation of a side of a device or a membrane facing the anode of the electrodialysis device.

As an example, it may also be possible that each of the cell arrays arranged in series between the cathode chamber and the anode chamber is separated by a first membrane at the cathode side and a second membrane at the anode site from at least one of the cell array, the cathode chamber and the anode chamber. The first membrane may specifically comprise at least one of a bipolar membrane and an anion exchange membrane. The second membrane may specifically comprise at least one of a bipolar membrane and an anion exchange membrane. The first membrane and the second membrane may be of similar type, for example may both comprise a bipolar membrane.

As outlined above, the cell which is defined by the bipolar membrane and the second cation exchange membrane comprises inlet means for passing the aqueous stream into said cell and outlet means for removing the aqueous stream comprising MOH from said cell. The cell which is defined at its cathode side by the first cation exchange membrane comprises inlet means for passing the aqueous stream comprising the alkali metal salt MA of the acid HA, into said cell. The cell which is defined at its anode side by the bipolar membrane comprises outlet means for removing the aqueous stream comprising HA from said cell. The bipolar membrane stack comprises:
- inlet means for passing the aqueous stream to the membrane stack; and outlet means for removing the aqueous stream comprising MOH from said membrane stack;
- inlet means for passing the aqueous stream comprising MA to the membrane stack; and outlet means for removing the aqueous stream comprising HA from said membrane stack.

The term "inlet means" as used herein, such as in the context of the cell and/or the bipolar membrane stack, is a broad term and is to be given its ordinary and customary meaning to a person of ordinary skill in the art and is not to be limited to a special or customized meaning. The term specifically may refer, without limitation, to an interface device configured for guiding fluid from at least one first device into at least one second device. As used in the context of the inlet means, the second device may comprise at least one of the cell and the bipolar membrane stack. The inlet means may specifically be located at the interface between the at least two devices. The inlet means may be configured for directing a stream of the fluid into the second device. For example, the inlet means may comprise at least one of a nozzle and a diffusor. As another example, the inlet means may comprise an opening, such that one or more of a tube or a pipe may be connectable with the second device.

The term "outlet means" as used herein, such as in the context of the cell and/or the bipolar membrane stack, is a broad term and is to be given its ordinary and customary meaning to a person of ordinary skill in the art and is not to be limited to a special or customized meaning. The term specifically may refer, without limitation, to an interface device configured for guiding fluid from at least one first device into at least one second device. As used in the context of the outlet means, the first device may comprise at least one of the cell and the bipolar membrane stack. The outlet means may specifically be located at the interface between the at least two devices. The outlet means may be configured for directing a stream of the fluid into the second device. For example, the outlet means may comprise at least one of a nozzle and a diffusor. As another example, the outlet means may comprise an opening, such that one or more of a tube or a pipe may be connectable with the first device.

Further, x≥2, i.e. the bipolar membrane stack may comprise at least two cell arrays, the bipolar membrane stack may further comprise:
- dividing means to divide the aqueous stream into x aqueous streams into the cells, i=1...x; and combining means for combining x aqueous streams comprising MOH from the cells to obtain a combined aqueous stream comprising MOH;
- dividing means to divide the aqueous stream comprising MA into x aqueous streams comprising MA into the cells, i=1...x; and combining means for combining x aqueous streams comprising HA from the cells to obtain a combined aqueous stream comprising HA.

The term "dividing means" as used herein is a broad term and is to be given its ordinary and customary meaning to a person of ordinary skill in the art and is not to be limited to a special or customized meaning. The term specifically may refer, without limitation, to a device configured for splitting a stream of a fluid into at least two substreams of the fluid, specifically into a plurality of substreams of the fluid. For example, the dividing means may comprise at least one flow divider.

The term "combining means" as used herein is a broad term and is to be given its ordinary and customary meaning to a person of ordinary skill in the art and is not to be limited to a special or customized meaning. The term specifically may refer, without limitation, to a device configured for cumulating at least two different streams of fluid, specifically a plurality of different streams, into one stream of the fluid. For example, the combining means may comprise at least one flow divider arranged in reverse direction.

As will be outlined in further detail below, the aqueous stream comprising HA removed from the bipolar membrane stack may comprise further substances. For example, the aqueous stream comprising HA may additionally comprise at least a part of the alkali metal salt MA. In the bipolar membrane stack, the aqueous stream comprising MA may be converted into the aqueous stream comprising HA. However, passing the aqueous stream comprising MA through the bipolar membrane stack only once may not fully convert all of the salt comprised by the aqueous stream comprising MA into the acid. Thus, when removing the aqueous stream comprising HA from the bipolar membrane stack, the aqueous stream comprising HA may further at least partially comprise the alkali metal salt MA. Thus, specifically as used in the context of the aqueous stream, the term "comprising" is used in a non-exclusive way. Specifically, the term "an aqueous stream comprising A" may not exclude the possibility that the aqueous stream may further comprise one or more other substances B, C, ..., wherein these substances comprised by the aqueous stream may be selected from the group consisting of: the alkali metal salt MA; the alkali metal hydroxide MOH; the Bronsted acid HA

Similarly, the aqueous stream passed into the bipolar membrane stack may comprise further substances. For example, the aqueous stream being passed into the bipolar membrane stack may be a pure water stream in the beginning of using the electrodialysis device. The aqueous stream comprising MOH removed from the bipolar membrane stack may be recirculated through the bipolar membrane stack. Thus, upon recirculating the aqueous stream comprising MOH through the bipolar membrane stack, the aqueous stream being passed into the bipolar membrane stack may additionally comprise at least a part of the aqueous stream comprising MOH.

Further, it may be possible that the aqueous stream comprising MA comprises at least two different alkali metal salts. Thus, the aqueous stream comprising MA passed into the bipolar membrane stack may comprise a mixture of one or more alkali metal salt. Consequently, the aqueous stream comprising HA may also comprise a mixture of one or more acids, specifically corresponding to the acids of the alkali metal salts.

Further, y may be 2 and each cell array may consist of 2 cells, i.e. a first cell and a second cell. This configuration of the bipolar membrane stack may specifically be referred to as "two-cell stack". The first cell may be defined by the bipolar membrane and the second cation exchange membrane. The first cell may comprise the inlet means for passing the aqueous stream into said cell and the outlet means for removing the aqueous stream comprising MOH from said cell. The second cell may be defined by the first cation exchange membrane and the bipolar membrane. The second cell may comprise the inlet means for passing the aqueous stream comprising MA into said cell and the outlet means for removing the aqueous stream comprising HA from said cell.

As an example, the aqueous stream being passed through the second cell of each cell array may be recirculated. Recirculating the aqueous stream through the second cell may comprise passing at least a part of the aqueous stream comprising HA as the aqueous stream comprising MA into the second cell. Thus, the aqueous stream comprising MA being passed into the second cell may comprise the salt MA in the beginning of using the electrodialysis device. Upon further circulating the aqueous stream through the second cell, the aqueous stream comprising MA may comprise both, the salt MA and the acid HA. An amount of the acid HA in the aqueous stream being circulated through the second cell may increase with repeated circulation, whereas an amount of the salt MA may decrease. Thus, the aqueous stream comprising HA removed from the second cell may comprise the acid HA and, optionally, a part of the salt MA. However, other examples of passing the aqueous stream through the second cell are also feasible, such as a single pass through, as will be outlined in further detail below.

As another example, y may be 3 and each cell array may consist of 3 cells, a first cell, a second cell and a third cell. This configuration of the bipolar membrane stack may specifically be referred to as "three-cell stack". The cell array may further comprise an anion exchange membrane which is arranged between the first cation exchange membrane and the bipolar membrane. The first cell may be defined by the bipolar membrane and the second cation exchange membrane. The first cell may comprise the inlet means for passing the aqueous stream into said cell and the outlet means for removing the aqueous stream comprising MOH from said cell. The second cell may be defined by the first cation exchange membrane and the anion exchange membrane. The second cell may comprise the inlet means for passing the aqueous stream comprising MA into said cell and outlet means. The third cell may be defined by the anion exchange membrane and the bipolar membrane. The third cell may comprise inlet means and the outlet means for removing the aqueous stream comprising HA from said cell. The outlet means of the second cell may be an outlet means for removing an aqueous stream comprising MA from the second cell. The inlet means of the third cell may be inlet means for passing an aqueous stream comprising HA into the third cell. The electrolysis device may further comprise dividing means to divide an aqueous stream comprising HA into x aqueous streams into the cells, i=1...x. The electrodialysis device may comprise combining means for combining x aqueous streams comprising MA from the cells to obtain a combined aqueous stream comprising MA.

The anion exchange membrane may be an organic polymer-based anion exchange membrane comprising nitrogen- and/or non-nitrogen based functional groups. The nitrogen based functional groups preferably may comprise one or more of quarternary ammonium groups, benzimidazolium groups, guanidinium groups and pyridinium groups. The non-nitrogen based functional groups preferably may comprise one or more of phosphonium group and sulfonium groups. More preferably, the anion exchange membrane may be an organic polymer-based anion exchange membrane comprising nitrogen based groups, more preferably quarternary ammonium groups. The organic polymer may preferably comprise, more preferably may be one or more of a polyvinyl chloride polymer, a polystyrene polymer, a polyethylene polymer, a polysulfone polymer, a polyacrylate polymer, a polyamide polymer, and a polypropylene polymer. More preferably, the organic polymer may comprise, more preferably may be a polyvinyl chloride polymer.

For example, the anion exchange membranes may comprise anion exchange membranes commercially available as "PC Acid 100" membranes. The PC Acid 100 anion exchange membrane may comprise a polyester reinforced membrane comprising ammonium groups. However, other options for the anion exchange membranes are also feasible.

Further, x may be in the range of from 1 to 200, preferably in the range of from 2 to 150, more preferably in the range of from 5 to 100, more preferably in the range of from 10 to 50. For example, for small scale, x may preferably be in the range of from 1 to 10, more preferably in the range of from 2 to 10, more preferably in the range of from 5 to 10. As another example, for large scale, x may preferably be in the range of from 20 to 100, more preferably in the range of from 25 to 150, more preferably in the range of from 50 to 100.

An electrode area of the bipolar membrane stack may be in the range of from 1 to 10,000 cm², preferably in the range of from 10 to 5,000 cm², more preferably in the range of from 20 to 1,000 cm², more preferably in the range of from 50 to 300 cm². A size of the membranes, specifically of one or more of the cation exchange membranes, the anion exchange membranes and the bipolar membranes, may correspond to the electrode area of the bipolar membrane stack, specifically may be at least as large as the electrode area of the bipolar membrane stack.

The cation exchange membrane, generally, may be an organic polymer-based cation exchange membrane comprising acidic functional groups, preferably strong acidic functional groups, more preferably sulfonic acid groups. The organic polymer may preferably comprise, more preferably may be one or more of a polyvinyl chloride polymer, a polystyrene polymer, a polyethylene polymer, a polysulfone polymer, a polyacrylate polymer, a polyamide polymer, and a polypropylene polymer. More preferably, the organic polymer may comprise, more preferably may be a polyvinyl chloride polymer.

Thus, the first cation exchange membrane may be an organic polymer-based cation exchange membrane comprising acidic functional groups, preferably strong acidic functional groups, more preferably sulfonic acid groups. The organic polymer may preferably comprise, more preferably may be one or more of a polyvinyl chloride polymer, a polystyrene polymer, a polyethylene polymer, a polysulfone polymer, a polyacrylate polymer, a polyamide polymer, and a polypropylene polymer. More preferably, the organic polymer may comprise, more preferably may be a polyvinyl chloride polymer.

The second cation exchange membrane may be an organic polymer-based cation exchange membrane comprising acidic functional groups, preferably strong acidic functional groups, more preferably sulfonic acid groups. The organic polymer may preferably comprise, more preferably may be one or more of a polyvinyl chloride polymer, a polystyrene polymer, a polyethylene polymer, a polysulfone polymer, a polyacrylate polymer, a polyamide polymer, and a polypropylene polymer. More preferably, the organic polymer may comprise, more preferably may be a polyvinyl chloride polymer.

For example, the first cation exchange membranes and/or the second cation exchange membranes may comprise cation exchange membranes commercially available as "PC SK" membranes. The PC SK cation exchange membrane may comprise a polyester reinforced membrane comprising sulfonic acid groups. The cation exchange membranes separating the bipolar membrane stack from the cathode chamber and/or from the anode chamber may be different from the other cation exchange membranes. The cation exchange membranes separating the bipolar membrane stack from the cathode chamber and/or from the anode chamber may comprise cation exchange membranes commercially available under "PC SC" membranes. The PC SC cation exchange membrane may comprise a polyvinylchloride reinforced membrane comprising sulfonic acid groups. However, other options for the first and second cation exchange membranes are also feasible.

The bipolar membrane may comprise, preferably may be a bilayered membrane comprising an anion exchange membrane and a cation exchange membrane. The anion exchange membrane may preferably comprise, more preferably may be an anion exchange membrane as defined in context of the present invention. The cation exchange membrane may preferably comprise, more preferably may be a cation exchange membrane as defined in the context of the present invention, such as defined in the context of the first cation exchange membrane and/or of the second cation exchange membrane. As an example, in case x>1, the cation exchange membranes comprised by one or more of the cell arrays of the bipolar membrane stack and the bipolar membrane may be the same or different cation exchange membrane, preferably the same cation exchange membranes. The anion exchange membranes comprised by one or more of the cell arrays of the bipolar membrane stack and the bipolar membrane may be the same of different anion exchange membranes, preferably the same anion exchange membranes.

The bipolar membranes, as an example, may comprise bipolar membranes commercially available as "PC bip" membranes. The PC bip membranes may comprise a cation exchange membrane layer made of a polyester reinforced membrane comprising sulfonic acid groups and an anion exchange membrane layer made of polyester reinforced membranes comprising ammonium groups. However, other options for the bipolar membranes are also feasible.

Further, the cathode chamber may comprise inlet means for passing an aqueous electrolyte stream into said chamber and outlet means for removing an aqueous electrolyte stream from said chamber. The anode chamber may comprise inlet means for passing an aqueous electrolyte stream into said chamber and outlet means for removing an aqueous electrolyte stream from said chamber. The electrodialysis device may further comprise means, also referred to as "means for passing the aqueous electrolyte stream from the cathode chamber into the anode chamber", for passing the aqueous electrolyte stream from the cathode chamber from the outlet means as the aqueous electrolyte stream into the anode chamber to the inlet means, specifically to the inlet means of the anode chamber. The electrodialysis device may further comprise means, also referred to as "means for passing the aqueous electrolyte stream from the anode chamber into the cathode chamber", for passing the aqueous electrolyte stream from the anode chamber from the outlet means as the aqueous electrolyte stream into the cathode chamber to the inlet means, specifically to the inlet means of the cathode chamber. Either the means for passing the aqueous electrolyte stream from the cathode chamber into the anode chamber and/or the means for passing the aqueous electrolyte stream from the anode chamber into the cathode chamber may comprise inlet means for passing an aqueous electrolyte stream into either the means for passing the aqueous electrolyte stream from the cathode chamber to the anode chamber, and/or the means for passing the aqueous electrolyte stream from the anode chamber into the cathode chamber.

The means for passing the aqueous electrolyte stream from the cathode chamber into the anode chamber and the means for passing the aqueous electrolyte stream from the anode chamber into the cathode chamber may be separate means or may fully or partially be combined. Thus, as an example, the means each may comprise at least one pump, wherein one, two or even more pumps may be used, such that, as an example, the means for passing the aqueous electrolyte stream from the cathode chamber into the anode chamber and the means for passing the aqueous electrolyte stream from the anode chamber into the cathode chamber may be realized by using separate pumps or by using at least one common or combined pump for both means. Additionally or alternatively, the means for passing the aqueous electrolyte stream from the cathode chamber into the anode chamber and the means for passing the aqueous electrolyte stream from the anode chamber into the cathode chamber may be fluid-ically connected, for example via tubes, pipes or any other fluid connection means. The fluid connection may comprise one or more storage containers for storing the aqueous electrolyte. The fluid connection may comprise one more pumps for pumping the aqueous electrolyte stream from the cathode chamber to the anode chamber and/or for pumping the aqueous electrolyte stream from the anode chamber to the cathode chamber

Further, the electrodialysis device may comprise degassing means for removing H₂ and optionally one or more further gases from the aqueous electrolyte stream, specifically from the aqueous electrolyte stream removed from the cathode chamber. The degassing device may comprise degassing means for removing O₂ and optionally one or more further gases from the aqueous electrolyte stream, specifically from the aqueous electrolyte stream removed from the anode chamber.

The degassing means, specifically the degassing means for removing H₂, may comprise a hydrogen combustion catalyst, wherein the hydrogen combustion catalyst may preferably be comprised in the form of a catalyst bed. Alternatively or additionally, the degassing means for removing H₂ may use an open combusting of H₂ for removing the H₂, such as by using a sparking device. As another example, the degassing means for removing H₂ may comprise a fuel cell, specifically a hydrogen fuel cell, for removing the H₂. As another example, the degassing means for removing H₂ may comprise a fan configured for diluting the removed H₂ with the ambient air, specifically to a hydrogen level below an explosive level. Alternatively or additionally, the removed H₂ from the aqueous electrolyte stream may be passed to further device configured for safely removing exhaust gases.

The hydrogen combustion catalyst may comprise a platinum group metal, preferably one or more of Pt, Rh and Pd, more preferably Pd, the platinum group metal preferably being supported in an inert support material, preferably on an oxidic material comprising one or more of Al, Ti, and Si, more preferably Al, the oxidic material more preferably comprising alumina.

Further, the degassing means, specifically the degassing means for removing H₂, may comprise a temperature measuring instrument for measuring the temperature in the catalyst bed. As an example, the temperature measuring instrument may comprise an resistance temperature sensor, such as a Pt1000 or the like, and may be arranged in the catalyst bed. By measuring the temperature using the temperature measuring instrument in the catalyst bed, it may be possible to detect a correct functioning of one or more of the electrodialysis device and the degassing means removing H₂. For example, in case the temperature measuring instrument may detect a temperature in the range of from 150 °C to 250°C, specifically in the range of from 180°C to 220°C, it may be possible to detect the correct functioning of the electrodialysis device and of the degassing means.

In a further aspect of the present invention, a process for simultaneously producing an aqueous stream comprising an alkali metal hydroxide MOH and an aqueous stream comprising a Bronsted acid HA is disclosed. The process is carried out in the electrodialysis device according to the present invention, such as according to any one of the embodiments described above and/or according to any one of the embodiments disclosed in further detail below. For definitions regarding the process, reference is made to the definitions of the electrodialysis device as outlined above.

In the process, M may comprise one or more of Na, K, and Li, preferably one or more of Na and K, more preferably Na, wherein more preferably, M may be Na.

The acid HA may be an acid having one or more pKa values, wherein at least one pKa value may be in the range of from 2 to 7. Specifically, the acid HA may also comprise anions being capable of dissociating at least one proton, such as hydrogen carbonate, hydrogen phosphate and dihydrogen phosphate. Additionally or alternatively, the acid HA may have two or more pKa values and wherein preferably at least one, more preferably at least 2 pKa values may be in the range of from 2 to 7. Specifically, the at least one pKa value may be in the rage of from 2.5 to 7, more specifically in the range of from 3 to 6.5. Generally, the acid HA with the preferred pKa value in the range of from 2.5 to 7, more specifically in the range of from 3 to 6.5 may result in higher current efficiencies during the process. Further, the salt MA may have a calcium stability constant pCa or pKCa of at least 5. The calcium binding may be pH dependent, since, e.g., at a low pH Ca competes with H⁺ for binding to the weak acid sites.

In the process, from 1 kg of the alkali metal salt MA, M preferably being Na, at least 350 g, preferably at least 400 g MOH, preferably NaOH, may be produced. The salt MA may be present in the aqueous stream, specifically in the aqueous stream comprising MA, in an amount in the range of from 20 to 100 %, preferably in the range of from 75 to 100 %, more preferably in the range of from 85 to 100 %, more preferably in the range of from 95 to 100 % of its solubility at 5 °C.

Additionally or alternatively, in the process, an aqueous stream comprising at least 2 Bronsted acids HA may be produced. At least 1 Bronsted acid HA may have at least one pKa value in the range of from 2 to 7. Specifically, the at least one pKa value may be in the rage of from 2.5 to 7, more specifically in the range of from 3 to 6.5. Further, at least 1 salt MA has a calcium stability constant pCa of at least 5, determined as described in Reference Example 1. In this example, at least 2 alkali metal salts MA may be comprised in the aqueous stream, specifically in the aqueous stream comprising MA, M preferably being the same in the at least 2 alkali metal salts MA. Therein, from 1 kg of the alkali metal salts MA, M preferably being Na, at least 350 g, preferably at least 400 g MOH, preferably NaOH, may be produced. At least one of the salts MA, preferably each of the salts of MA may be present in the aqueous stream, specifically in the aqueous stream comprising MA, in an amount in the range of from 20 to 100 %, preferably in the range of from 75 to 100 %, more preferably in the range of from 85 to 100 %, more preferably in the range of from 95 to 100 % of its solubility at 5 °C.

The acid may specificially be an organic acid, wherein the organic acid may comprise a monobasic or polybasic carboxylic acid, preferably a monocarboxylic acid or a dicarboxylic acid or a tricarboxylic acid or a mixture of a monocarboxylic acid and a dicarboxylic acid or a mixture of a monocarboxylic acid and a tricarboxylic acid or a mixture of a dicarboxylic acid and a tricarboxylic acid or a mixture of a monocarboxylic acid and a dicarboxylic acid and a tricarboxylic acid.

For example, the organic acid may comprise, preferably consists of, lactic acid or citric acid or methyl glycine diacetic acid. More preferably, the organic acid may comprise, more preferably may consist of, citric acid.

The alkali metal salt MA of the acid HA may comprise one or more of monoalkali metal citrate, dialkali metal citrate and trialkali metal citrate, preferably one or more of monosodium citrate, disodium citrate and trisodium citrate, more preferably trisodium citrate. More preferably, the alkali metal salt MA of the acid HA may be trisodium citrate. As another example, the alkali metal salt MA may comprise inorganic buffering salts, such as one or more of sodium carbonate, sodium hydrogen carbonate, sodium phosphate.

The salt may comprise, specifically consist of, at least one salt selected from the group consisting of a citrate; a dicarboxymethyl alaninate (MGDA) such as trisodium dicarboxymethyl alaninate (Na₃-MGDA); a N,N-bis(carboxymethyl)-L-glutamate (GLDA) such as tetrasodium N,N-bis(carboxymethyl)-L-glutamate (Na₄-GLDA); an iminodisuccinate (IDS) such as tetrasodium iminodisuccinate (Na₄-IDS); a triphosphate such as sodium triphosphate (STP); a salt of ethylenediaminetetraacetic acid (EDTA) such as tetrasodium ethylenediaminetetraacetic acid (Na₄-EDTA); a polyacrylate; a lactate; an oxalate; a gluconate; a sulphate; a carbonate and a hydrogen carbonate. Specifically, in case the bipolar membrane stack is configured as the two-cell stack, the salt may preferably comprise, optionally consist of, one or more of a citrate and an MGDA such as Na₃-MGDA. In case the bipolar membrane stack is configured as the three-cell stack, the salt may preferably comprise, optionally consist of, one or more of a lactate; an acetate; a gluconate; an oxalate; a sulphate; a carbonate and a polyacrylate.

For example, the salt may comprise a mixture of two or more salts, such as a mixture of Na₃-MGDA and Na₂SO₄. In this example, the acid may comprise a mixture of acids, such as a mixture of H₂SO₄ and H₃MGDA. Additionally or alternatively, the salt may comprise, optionally consist of, a mixture of Na₃-MGDA and sodium citrate, specifically in a molar ratio of three parts sodium citrate per one part Na₃-MGDA. Additionally or alternatively, the salt may comprise, optionally consist of, a mixture of Na₄-GLDA and sodium citrate, specifically in a molar ratio of three parts sodium citrate per one part Na₄-GLDA. Additionally or alternatively, the salt may comprise, optionally consists of, a mixture of Na₄-IDS and sodium citrate, specifically in a molar ratio of three parts sodium citrate per one part Na₄-IDS.

Further, a cross flow velocity of any one of MA, HA and MOH, specifically of any one of the aqueous stream, the aqueous stream comprising MA, the aqueous stream comprising HA and the aqueous stream comprising MOH, in the electrodialysis device may be in the range of from 0.01 to 5 cm/s, preferably in the range of from 0.1 to 3 cm/s, more preferably in the range of from 0.05 to 1 cm/s. As used herein, the cross flow velocity may refer to a linear velocity of a flow, specifically of a flow of any one of above-mentioned aqueous streams, being tangential to a membrane surface.

In the process, an electric current density in the electrodialysis device may be in the range of from 10 to 1,500 A/m², preferably in the range of from 100 to 1,000 A/m², more preferably in the range of from 200 to 400 A/m². Specifically, it may be preferred to hold the electric current density fixed at a value in the above-mentioned range.

The aqueous stream, specifically the aqueous stream comprising MOH, may have a pH of at least 12, preferably of at least 12.5, more preferably of at least 13, more preferably of at least 13.5. The pH-value of the aqueous stream comprising MOH may be determined by common methods and devices, such by using colorimetric tests and/or a pH-meter and/or a conductivity sensor with a conductivity-pH calibration.

In the following examples, y may be 2 and the process may be carried out in the electrodialysis device according to an embodiment having the bipolar membrane stack configured as the two-cell stack.

Therein, the aqueous stream comprising MOH removed from the membrane stack may be at least partially recirculated into the membrane stack, preferably via the aqueous stream. The aqueous stream comprising HA removed from the membrane stack may be at least partially recirculated into the membrane stack, preferably via the aqueous stream comprising MA. In this context, the term "at least partially recirculated" is a broad term and is to be given its ordinary and customary meaning to a person of ordinary skill in the art and is not to be limited to a special or customized meaning. The term specifically may refer, without limitation, to a situation in which one part of an aqueous stream, such as the aqueous stream comprising MOH and/or the aqueous stream comprising HA, is recirculated into the membrane stack and the other part of the aqueous stream is guided to a further component of the electrodialysis device, for example to one or more storage tanks for storing the aqueous stream. However, the term may also refer to a situation in which all of the aqueous steam, specifically all of the aqueous stream comprising MOH and/or the aqueous stream comprising HA, is recirculated to the membrane stack. The aqueous stream being passed into the bipolar membrane stack, specifically into the first cell of the bipolar membrane stack, may comprise a mixture of at least a part of the recirculated aqueous stream comprising MOH and of the aqueous stream. The aqueous stream comprising MA being passed into the bipolar membrane stack, specifically into the second cell of the bipolar membrane stack, may comprise a mixture of at least a part of the recirculated aqueous stream comprising HA and of the aqueous stream comprising MA. This operation mode of the electrodialysis device may be referred to as "batch operation mode".

In another example, the aqueous stream comprising MOH removed from the membrane stack may be not recirculated into the membrane stack. The aqueous stream comprising HA removed from the membrane stack is not recirculated into the membrane stack. Alternatively, however, the aqueous stream comprising MOH removed from the membrane stack may be at least partially recirculated into the membrane stack, preferably via the aqueous stream, while the aqueous stream comprising HA removed from the membrane stack may be not recirculated into the membrane stack. This operation mode of the electrodialysis device may be referred to as "continuous operation mode".

Further, the aqueous stream comprising MOH removed from the membrane stack may be not recirculated into the membrane stack. The aqueous stream comprising HA removed from the membrane stack may be at least partially recirculated into the membrane stack, preferably via the aqueous stream comprising MA. As outlined above, in case of recirculation, the aqueous stream comprising MA being passed into the bipolar membrane stack, specifically into the second cell of the bipolar membrane stack, may comprise a mixture of at least a part of the recirculated aqueous stream comprising HA and of the aqueous stream comprising MA. This operation modes of the electrodialysis device may be referred to as "semi-batch operation mode".

In this example, the acid HA may be an acid having one or more pKa values with at least one pKa value being in the range of from 2 to 7. The salt MA may have a calcium stability constant pCa of at least 5. The salt MA may be present in the aqueous stream, specifically in the aqueous stream comprising MA, more specifically in the aqueous stream comprising MA in the beginning of the process, in an amount in the range of from 20 to 100 %, preferably in the range of from 75 to 100 %, more preferably in the range of from 85 to 100 %, more preferably in the range of from 95 to 100 % of its solubility at 5 °C. From 1 kg of the alkali metal salt MA, at least 350 g, preferably at least 400 g MOH, may be produced.

In the process, an aqueous stream comprising at least 2 Bronsted acids HA may be produced. At least 1 Bronsted acid HA may have at least one pKa value in the range of from 2 to 7. At least one of the salts MA may have a calcium stability constant pCa of at least 5. At least one of the salts MA, preferably each of the salts of MA may be present in the aqueous stream, specifically in the aqueous stream comprising MA, more specifically in the aqueous stream comprising MA in the beginning of the process, in an amount in the range of from 20 to 100 %, preferably in the range of from 75 to 100 %, more preferably in the range of from 85 to 100 %, more preferably in the range of from 95 to 100 % of its solubility at 5 °C. At least 2 alkali metal salts MA may be comprised in the aqueous stream, specifically in the aqueous stream comprising MA, M preferably being the same in the at least 2 alkali metal salts MA. From 1 kg of the alkali metal salts MA, at least 350 g, preferably at least 400 g MOH, may be produced. When using two salts in the aqueous stream comprising MA, one of the salts MA may have at least one Bronsted acid HA having a pKa value in the range of from 2 to 7 and/or a capability of producing at least 350 g MOH, preferably NaOH, from 1 kg of the alkali metal salt and the other salt may have a calcium stability constant pCa of at least 5. As an example, a mixture of citrate and MGDA may be comprised by the aqueous medium comprising MA, wherein citrate may have a favorable pKa value in the range of from 2 to 7 and MGDA may have a favorable calcium stability constant pCa of at least 5.

In these examples, M may comprise, preferably may be Na.

In the following examples, y may be 3 and the process may be carried out in the electrodialysis device according to an embodiment having the bipolar membrane stack configured as the three-cell stack.

The aqueous stream comprising MA removed from the membrane stack may be at least partially recirculated into the membrane stack, preferably via the aqueous stream, specifically via the aqueous stream comprising MA being passed into the second cell of the bipolar membrane stack. The aqueous stream comprising MOH removed from the membrane stack may be not recirculated into the membrane stack. The aqueous stream comprising HA removed from the membrane stack may be not recirculated into the membrane stack.

However, other modes of operating the electrodialysis device having the bipolar membrane stack configured as the three-cell stack may also be possible. For example, it may be possible to recirculate all of the aqueous streams, specifically the aqueous stream comprising MA, the aqueous stream comprising HA and the aqueous stream comprising MOH, into the bipolar membrane stack. As another example, all of the aqueous streams, specifically the aqueous stream comprising MA, the aqueous stream comprising HA and the aqueous stream comprising MOH, may be not recirculated into the bipolar membrane stack. Alternatively, the aqueous stream comprising MA and the aqueous stream comprising HA may be recirculated into the membrane stack, wherein the aqueous stream comprising MOH may not be recirculated. As another example, the aqueous stream comprising MA and the aqueous stream comprising MOH may be recirculated into the membrane stack, wherein the aqueous stream comprising HA may not be recirculated. Other options for passing the aqueous streams through the membrane stack are also feasible.

Further, the aqueous electrolyte stream may comprise one or more of NaOH, H₂SO₄, NaNO₃, and at least one of the at least one salt MA, preferably one or more of NaOH, H₂SO₄, NaNO₃, Na₂SO₄, and trisodium citrate. A cross flow velocity of the electrolyte stream in the electrodialysis device may be in the range of from 0.1 to 20 cm/s, preferably in the range of from 0.2 to 5 cm/s, more preferably in the range of from 0.5 to 1 cm/s.

The process and the device according to the present invention may provide a large number of advantages over known methods and devices of similar kind. Specifically, the electrodialysis device according to the present invention may be configured for producing the aqueous stream comprising MOH and the aqueous stream comprising HA from the aqueous stream comprising the salt MA. A wide variety of salts may be used in the electrodialis device. For example, salts having a high molecular size, such as sodium citrate, may be used in the electrodialysis device having the bipolar membrane stack embodied as the two-cell stack. In this configuration, production of MOH and of HA by means of bipolar membrane electrodialysis may be performed in a highly efficient way, as will be outlined in further detail below.

Further, dangerous gases, such as hydrogen, chlorine gas and/or other hazardous substance produced the bipolar membrane electroldiaysis may be removed by using the degassing means. Thus, safety during performance of the bipolar membrane electrodialysis may significantly enhanced by using the electrodialysis device according to the present invention.

The electrodialysis device according to the present invention may enable efficiently producing the aqueous stream comprising MOH and the aqueous stream comprising HA from the aqueous stream comprising MA. Specifically, salts of high molecular size, such as sodium citrate, may be used in the electrodialysis device. For example, these salts having a high molecular size, such as sodium citrate, may preferably be used in the electrodialysis device having the bipolar membrane stack configured as the two-cell stack. More preferably, the electrodialysis device may be operated in the semi-batch operation mode, whereby the aqueous stream comprising HA is recirculated through the bipolar membrane stack, whereas the aqueous stream comprising MOH is not recirculated. This operation mode may enhance efficiency of producing MOH, specifically of producing sodium hydroxide, using bipolar membrane electrodialysis.

As a further example, the salt may comprise one or more of the following: sodium citrate; Na₃-MGDA; Na₄-GLDA; Na₄-IDS; sodium polyphosphate; sodium lactate; sodium oxalate; sodium gluconate; sodium sulphate; sodium carbonate; sodium polyacrylate. Some of the salts may have a high molecular size, such as sodium citrate, such that electrodialysis in the so-called three-cell stack is an inefficient process. Therefore, these salts may be used in the electrodialysis device having the bipolar membrane stack embodied in the two-cell stack. Using salts having a hight molecular size, such as sodium citrate, may be efficiently performed in this configuration of the electrodialysis device. An efficient process may comprise recirculating the aqueous stream comprising MA through the bipolar membrane while the aqueous stream being converted into the aqueous stream comprising MOH is passed once through the bipolar membrane stack. As an example, MOH may be sodium hydroxide and HA may be citric acid which may be efficiently prepared by the electrodialysis device.

Further, the application of bipolar membrane electrodialysis using the electrodialysis device may enable the generation of the aqueous stream comprising MOH, specifically comprising sodium hydroxide, and the aqueous stream comprising HA, specifically comprising citric acid, from the aqueous stream comprising MA, specifically from a sodium citrate feed solution. The electrodialysis device may comprise the bipolar membrane stack embodied as the two-cell having two cells in each cell array or, alternatively, the bipolar membrane stack embodied as the three-cell stack having three cells in each cell array. The two-cell stack may be preferred, specifically when using salts such as sodium citrate, since intended transport processes may be reduced in the three-cell stack. Operation of the electrodialysis device using the two-cell stack configuration and the batch operation mode may enable preparing the aqueous stream comprising MOH, specifically an aqueous stream comprising sodium hydroxide, with a pH value ranging in between 12.6 - 13.0 and preparing the aqueous stream comprising HA, specifically an aqueous stream comprising citric acid, with a pH value ranging in between 2.4 - 4.6 from the aqueous stream comprising MA, specifically from an aqueous stream comprising sodium citrate with concentrations of 2 wt% (weight-%) of sodium citrate. Thus, as an example, bipolar membrane electrodialysis may be able to effectively generate sodium hydroxide and citric acid from a sodium citrate solution. Furthermore, operation of the electrodialysis device in the continuous operation mode may result in the generation of the aqueous stream comprising MOH, specifically comprising sodium hydroxide, with a pH value up to 12.6 and of the aqueous stream comprising HA; specifically comprising citric acid, with a pH value down to 5.4.

Moreover, the electrodialysis device having the bipolar membrane stack in the two-cell stack configuration may allow effectively generating the aqueous stream comprising MOH and the aqueous stream comprising HA. The electrodialysis device may be operated in various operation conditions, such as with fixed electric potential and fixed electric current density, and various operation modes, such as the batch operation mode, the continuous operation and/or the semi-batch operation mode, indicating the high flexibility of the devices according to the present invention.

Further, the bipolar membrane electrodialysis performed in the electrodialysis device may enable production of the aqueous stream comprising MOH, specifically comprising sodium hydroxide, and of the aqueous stream comprising HA, specifically comprising citric acid, from the aqueous stream comprising MA, specifically comprising sodium citrate solution, with high MOH concentrations, high MOH production rates and also high conversion efficiencies. The electrodialysis device may be operated in the batch operation mode, the continuous operation mode and/or the semi-batch operation mode. Specifically, in the continuous operation mode and the semibatch operation mode, applying higher electric current densities may result in higher MOH concentrations, specifically higher sodium hydroxide concentrations, in the produced aqueous stream comprising MOH, as well as higher MOH production rates. However, the energy consumption may increase for higher electric current densities. The batch operation mode may yield highest sodium hydroxide concentrations compared with the semi-batch operation mode and the continuous operation mode but with lower current efficiencies. In the semi-batch operation mode and in the continuous operation mode, the aqueous stream comprising MOH, specifically comprising sodium hydroxide, may be removed more quickly from the bipolar membrane stack, thus yielding lower sodium hydroxide concentrations but better current efficiency and possibly higher overall produced quantities of sodium hydroxide compared with the batch operation mode.

For the continuous operation mode, an increase in electric current density may also result in higher conversion efficiencies. Further, in the continuous operation mode, for higher concentrations of MA, specifically of sodium citrate, in the aqueous stream comprising MA, the conversion efficiency may decrease, because the additional amount of sodium may not be converted to MOH, specifically to sodium hydroxide, for the set flow rates of 1 L/h for the aqueous stream comprising MA and the applied electric current densities of 100, 200 and 400 A/m². The conversion efficiency may be in the range from 5 - 28% for the continuous operation mode and for the used concentration of MA, specifically of sodium citrate, in the aqueous stream comprising MA. On the contrary, the conversion efficiency may be at least 76% for the semi-batch operation mode at applied electric current densities of 100, 200 and 400 A/m² and at MA concentrations, MA being specifically sodium citrate, of 2, 10, 20 and 35 wt%. By way of example, a ratio of 2, 10, 20 and 35 wt % corresponds to a concentration of 20, 100, 200 and 540 g/L, respectively. Therefore, operation of the electrodialysis device in semi-batch operation mode may be preferred over the continuous operation mode, as both high MOH concentrations concentration of 0.7 mol/L and production rates up to 0.5 g/min may be achieved, while also having high conversion efficiencies for the used MA concentrations. For example, the energy consumption to produce sodium hydroxide by using bipolar membrane electrodialysis from the aqueous stream comprising sodium citrate ranged in between 1 - 3 kWh/kg-NaOH, which may be lower than the continuous operation mode and the batch operation mode. Finally, a production of 3 g/min of sodium hydroxide may be achieved by using the electrodialysis device having an electrode area of at least 200 cm² and at least 20 groups of chambers.

The production of the aqueous stream comprising MOH, specifically comprising sodium hydroxide, and the aqueous stream comprising HA, specifically comprising citric acid, from the aqueous stream comprising MA, specifically comprising sodium citrate, may be a function of the electric current density and the concentration of MA in the initial aqueous stream comprising MA. Thus, increasing the electric current density may result in an increase in the MOH concentration and MOH production rate, while also the energy consumption increases. Moreover, both operation of the electrodialysis device in the continuous operation mode and in the semi-batch operation mode may be beneficial for maximizing the MOH concentration and production rate, as well as the conversion efficiency. For example, in the continuous operation mode, it may be possible to achieve high sodium hydroxide concentrations up to 1.3 mol/L and high production rates up to 0.9 g/min. However, when higher concentrations of sodium citrate, for example 10, 20 and 35 wt%, are used, the conversion efficiency may be in the range of 5 - 49%. In case of using 2 wt% sodium citrate, the high conversion efficiencies may reach up to 89%. However, in practice a sodium citrate concentration of 35 wt% is desirable and operation in the semi-batch mode operation may be preferred. In the semi-batch operation mode, sodium hydroxide concentrations up to 0.7 mol/L and production rates up to 0.5 g/min may be achieved, while the conversion efficiency may be at least 76%. Thus, the semi-batch operation mode may be preferred over the continuous operation mode to achieve an efficient process. Increasing the sodium hydroxide production rate up to 3 g/min may be achieved by increasing both the electrode area to at least 200 cm² and the number of cells in the cell array to at least 200.

However, for achieving a sodium hydroxide production rate of 3 g/min, various factors have to be considered. One possibility may be increasing the electric current density up to 1,200 - 2,400 A/m². In this example, the applied electric potential would also increase based on Ohm's Law and exceed 100 V. Because for the practical application a maximum electric potential of 42 V is feasible, this possibility is not preferred, but nevertheless possible. Another possibility to achieve sodium hydroxide production rate of 3 g/min may be using of at least sixty cell arrays at a current density of at least 200 A/m², or even 400 A/m². However, increasing the number of the cell arrays will again lead to an increase of the applied electric potential higher than 100 V. Thus, this possibility is not preferred, but nevertheless possible. A further possibility of achieving a sodium hydroxide production rate of 3 g/min may be providing a larger electrode area of 200 cm², which allows for more sodium transport at the same electric current density. Furthermore, the number of cell arrays may be increased up to 20 groups of chambers, however, keeping the applied electric potential remains below 42 V. In this example, an applied electric current density of 200 A/m² in the semi-batch operation mode may enable sufficient conversion of 35 wt% sodium citrate to sodium hydroxide and citric acid.

The present invention is further illustrated by the following set of embodiments and combinations of embodiments resulting from the dependencies and back-references as indicated. In particular, it is noted that in each instance where a range of embodiments is mentioned, for example in the context of a term such as "any one of embodiments (1) to (4)", every embodiment in this range is meant to be explicitly disclosed for the skilled person, i.e. the wording of this term is to be understood by the skilled person as being synonymous to "any one of embodiments (1), (2), (3), and (4)". Further, it is explicitly noted that the following set of embodiments is not the set of claims determining the extent of protection, but represents a suitably structured part of the description directed to general and preferred aspects of the present invention.

Summarizing and without excluding further possible embodiments, the following embodiments may be envisaged:
1. An electrodialysis device for simultaneously producing an aqueous stream comprising an alkali metal hydroxide MOH and an aqueous stream comprising a Bronsted acid HA, said electrodialysis device comprising a cathode arranged in a cathode chamber, an anode arranged in an anode chamber, and a bipolar membrane stack arranged between the anode chamber and the cathode chamber;
   said bipolar membrane stack comprising x cell arrays, i=1...x, arranged in series between the cathode chamber and the anode chamber, wherein each cell array consists of y cells, k=1 ... y, and is defined by a first cation exchange membrane at the cathode side of the cell array, a second cation exchange membrane at the anode side of the cell array and a bipolar membrane arranged between the first cation exchange membrane and the second cation exchange membrane;
   wherein a cell which is defined by the bipolar membrane and the second cation exchange membrane comprises inlet means for passing an aqueous stream into said cell and outlet means for removing an aqueous stream comprising MOH from said cell; wherein a cell which is defined at its cathode side by the first cation exchange membrane comprises inlet means for passing an aqueous stream comprising an alkali metal salt MA of the acid HA, into said cell; wherein a cell which is defined at its anode side by the bipolar membrane comprises outlet means for removing an aqueous stream comprising HA from said cell;
   wherein the bipolar membrane stack comprises:
   - inlet means for passing an aqueous stream to the membrane stack; and outlet means for removing the aqueous stream comprising MOH from said membrane stack;
   - inlet means for passing an aqueous stream comprising MA to the membrane stack; and outlet means for removing the aqueous stream comprising HA from said membrane stack;
   wherein y is 2 or 3 and wherein x ≥ 1.
2. The electrodialysis device according to embodiment 1, wherein x≥2 and the bipolar membrane stack further comprises:
   - dividing means to divide the aqueous stream into x aqueous streams into the cells, i=1...x; and combining means for combining x aqueous streams comprising MOH from the cells to obtain a combined aqueous stream comprising MOH;
   - dividing means to divide the aqueous stream comprising MA into x aqueous streams comprising MA into the cells, i=1...x; and combining means for combining x aqueous streams comprising HA from the cells to obtain a combined aqueous stream comprising HA.
3. The electrodialysis device according to embodiment 1 or 2, wherein y is 2 and wherein each cell array consists of 2 cells, wherein a first cell is defined by the bipolar membrane and the second cation exchange membrane and comprises inlet means for passing the aqueous stream into said cell and outlet means for removing the aqueous stream comprising MOH from said cell; and wherein a second cell is defined by the first cation exchange membrane and the bipolar membrane and comprises the inlet means for passing the aqueous stream comprising MA into said cell and the outlet means for removing the aqueous stream comprising HA from said cell.
4. The electrodialysis device according to embodiment 1 or 2, wherein y is 3 and wherein each cell array consists of 3 cells and further comprises an anion exchange membrane which is arranged between the first cation exchange membrane and the bipolar membrane .
5. The electrodialysis device according to embodiment 4, wherein a first cell is defined by the bipolar membrane and the second cation exchange membrane and comprises inlet means for passing the aqueous stream into said cell and outlet means for removing the aqueous stream comprising MOH from said cell; wherein a second cell is defined by the first cation exchange membrane and the anion exchange membrane and comprises the inlet means for passing the aqueous stream comprising MA into said cell and outlet means; and wherein a third cell is defined by the anion exchange membrane and the bipolar membrane and comprises inlet means and the outlet means for removing the aqueous stream comprising HA from said cell.
6. The electrodialysis device according to embodiment 5, wherein the outlet means of the second cell are outlet means for removing an aqueous stream comprising MA from the cell and wherein the inlet means of the third cell are inlet means for passing an aqueous stream comprising HA into the cell, the electrolysis device further comprising dividing means to divide an aqueous stream comprising HA into x aqueous streams into the cells, i=1...x; and combining means for combining x aqueous streams comprising MA from the cells to obtain a combined aqueous stream comprising MA.
7. The electrodialysis device according to any one of embodiments 4 to 6, wherein the anion exchange membrane is an organic polymer-based anion exchange membrane comprising nitrogen- and/or non-nitrogen based functional groups, wherein the nitrogen based functional groups preferably comprise one or more of quarternary ammonium groups, benzimidazolium groups, guanidinium groups and pyridinium groups, and wherein the non-nitrogen based functional groups preferably comprise one or more of phosphonium group and sulfonium groups, wherein more preferably, the anion exchange membrane is an organic polymer-based anion exchange membrane comprising nitrogen based groups, more preferably quarternary ammonium groups, wherein the organic polymer preferably comprises, more preferably is one or more of a polyvinyl chloride polymer, a polystyrene polymer, a polyethylene polymer, a polysulfone polymer, a polyacrylate polymer, a polyamide polymer, and a polypropylene polymer, wherein more preferably, the organic polymer comprises, more preferably is a polyvinyl chloride polymer.
8. The electrodialysis device according to any one of embodiments 1 to 7, wherein x is in the range of from 1 to 200, preferably in the range of from 2 to 150, more preferably in the range of from 5 to 100, more preferably in the range of from 10 to 50.
9. The electrodialysis device according to any one of embodiments 1 to 8, wherein an electrode area of the bipolar membrane stack is in the range of from 1 to 10,000 cm², preferably in the range of from 10 to 5,000 cm², more preferably in the range of from 20 to 1,000 cm², more preferably in the range of from 50 to 300 cm².
10. The electrodialysis device according to any one of embodiments 1 to 9, wherein the first cation exchange membrane is an organic polymer-based cation exchange membrane comprising acidic functional groups, preferably strong acidic functional groups, more preferably sulfonic acid groups, wherein the organic polymer preferably comprises, more preferably is one or more of a polyvinyl chloride polymer, a polystyrene polymer, a polyethylene polymer, a polysulfone polymer, a polyacrylate polymer, a polyamide polymer, and a polypropylene polymer, wherein more preferably, the organic polymer comprises, more preferably is a polyvinyl chloride polymer.
11. The electrodialysis device according to any one of embodiments 1 to 10, wherein the second cation exchange membrane is an organic polymer-based cation exchange membrane comprising acidic functional groups, preferably strong acidic functional groups, more preferably sulfonic acid groups, wherein the organic polymer preferably comprises, more preferably is one or more of a polyvinyl chloride polymer, a polystyrene polymer, a polyethylene polymer, a polysulfone polymer, a polyacrylate polymer, a polyamide polymer, and a polypropylene polymer, wherein more preferably, the organic polymer comprises, more preferably is a polyvinyl chloride polymer.
12. The electrodialysis device according to any one of embodiments 1 to 11, wherein the bipolar membrane comprises, preferably is a bilayered membrane comprising an anion exchange membrane and a cation exchange membrane, wherein the anion exchange membrane preferably comprises, more preferably is an anion exchange membrane as defined in embodiment 7 and wherein the cation exchange membrane preferably comprises, more preferably is a cation exchange membrane as defined in embodiment 10 or 11.
13. The electrodialysis device according to any one of embodiments 1 to 12, wherein the cathode chamber comprises inlet means for passing an aqueous electrolyte stream into said chamber and outlet means for removing an aqueous electrolyte stream from said chamber, and wherein the anode chamber comprises inlet means for passing an aqueous electrolyte stream into said chamber and outlet means for removing an aqueous electrolyte stream from said chamber.
14. The electrodialysis device according to embodiment 13, further comprising means for passing the aqueous electrolyte stream from the cathode chamber from the outlet means as the aqueous electrolyte stream into the anode chamber to the inlet means, and further comprising means for passing the aqueous electrolyte stream from the anode chamber from the outlet means as the aqueous electrolyte stream into the cathode chamber to the inlet means.
15. The electrodialysis device according to embodiment 14, wherein either the means for passing the aqueous electrolyte stream from the cathode chamber into the anode chamber and/or the means for passing the aqueous electrolyte stream from the anode chamber into the cathode chamber comprise inlet means for passing an aqueous electrolyte stream into either the means for passing the aqueous electrolyte stream from the cathode chamber into the anode chamber and/or the means for passing the aqueous electrolyte stream from the anode chamber into the cathode chamber.
16. The electrodialysis device according to any one of embodiments 13 to 15, further comprising degassing means for removing H₂ and optionally one or more further gases from the aqueous electrolyte stream and degassing means for removing O₂ and optionally one or more further gases from the aqueous electrolyte stream .
17. The electrodialysis device according to embodiment 16, wherein the degassing means for removing H₂ comprises a hydrogen combustion catalyst, wherein the hydrogen combustion catalyst is preferably comprised in the form of a catalyst bed.
18. The electrodialysis device according to embodiment 17, wherein the hydrogen combustion catalyst comprises a platinum group metal, preferably one or more of Pt, Rh and Pd, more preferably Pd, the platinum group metal preferably being supported in an inert support material, preferably on an oxidic material comprising one or more of Al, Ti, and Si, more preferably Al, the oxidic material more preferably comprising alumina.
19. The electrodialysis device according to embodiment 17 or 18, wherein the degassing means for removing H₂ further comprises a temperature measuring instrument for measuring the temperature in the catalyst bed.
20. A process for simultaneously producing an aqueous stream comprising an alkali metal hydroxide MOH and an aqueous stream comprising a Bronsted acid HA, the process being carried out in the electrodialysis device according to any one of embodiments 1 to 19, specifically from an aqueous stream comprising at least one salt MA.
21. The process according to embodiment 20, wherein M comprises one or more of Na, K, and Li, preferably one or more of Na and K, more preferably Na, wherein more preferably, M is Na.
22. The process according to embodiment 20 or 21, wherein the acid HA has one or more pKa values, wherein at least one pKa value is in the range of from 2 to 7.
23. The process according to embodiment 22, wherein the acid HA has two or more pKa values and wherein at least one, preferably at least 2 pKa values are in the range of from 2 to 7.
24. The process according to any one of embodiments 20 to 23, wherein the salt MA has a calcium stability constant pCa of at least 5.
25. The process according to any one of embodiments 20 to 24, wherein from 1 kg of the alkali metal salt MA, M preferably being Na, at least 350 g, preferably at least 400 g MOH, preferably NaOH, are produced.
26. The process according to any one of embodiments 20 to 25, wherein the salt MA is present in the aqueous stream comprising MA in an amount in the range of from 20 to 100 %, preferably in the range of from 75 to 100 %, more preferably in the range of from 85 to 100 %, more preferably in the range of from 95 to 100 % of its solubility at 5 °C.
27. The process according to any one of embodiments 20 to 26, wherein an aqueous stream comprising at least 2 Bronsted acids HA is produced.
28. The process according to embodiment 27, wherein at least 1 Bronsted acid HA has at least one pKa value in the range of from 2 to 7.
29. The process according to embodiment 27 or 28, wherein at least 1 salt MA has a calcium stability constant pCa of at least 5, determined as described in Reference Example 1.
30. The process of any one embodiments 27 to 29, wherein at least 2 alkali metal salts MA are comprised in the aqueous stream comprising MA, M preferably being the same in the at least 2 alkali metal salts MA, wherein from 1 kg of the alkali metal salts MA, M preferably being Na, at least 350 g, preferably at least 400 g MOH, preferably NaOH, are produced.
31. The process according to any one of embodiments 27 to 30, wherein at least one of the salts MA, preferably each of the salts of MA is present in the aqueous stream comprising MA in an amount in the range of from 20 to 100 %, preferably in the range of from 75 to 100 %, more preferably in the range of from 85 to 100 %, more preferably in the range of from 95 to 100 % of its solubility at 5 °C.
32. The process according to any one of embodiments 20 to 31, wherein the at least one salt MA comprises, specifically consists of, at least one salt selected from the group consisting of a citrate; a dicarboxymethyl alaninate (MGDA) such as trisodium dicarboxymethyl alaninate (Na₃-MGDA); a N,N-bis(carboxymethyl)-L-glutamate (GLDA) such as tetrasodium N,N-bis(carboxymethyl)-L-glutamate (Na₄-GLDA); an iminodisuccinate (IDS) such as tetrasodium iminodisuccinate (Na₄-IDS); a triphosphate such as sodium triphosphate (STP); a salt of ethylenediaminetetraacetic acid (EDTA) such as tetrasodium ethylenediaminetetraacetic acid (Na₄-EDTA); a polyacrylate; a lactate; an oxalate; a gluconate; a sulphate; a carbonate and a hydrogen carbonate.
33. The process according to any one of embodiments 20 to 32, wherein the cross flow velocity of any one of MA, HA and MOH in the electrodialysis device is in the range of from 0.01 to 5 cm/s, preferably in the range of from 0.1 to 3 cm/s, more preferably in the range of from 0.05 to 1 cm/s.
34. The process according to any one of embodiments 20 to 33, wherein the electric current density in the electrodialysis device is in the range of from 10 to 1,500 A/m², preferably in the range of from 100 to 1,000 A/m², more preferably in the range of from 200 to 400 A/m².
35. The process according to any one of embodiments 20 to 34, wherein the aqueous stream comprising MOH has a pH of at least 12, preferably of at least 12.5, more preferably of at least 13, more preferably of at least 13.5.
36. The process according to any one of embodiments 20 to 35, wherein y is 2 and the process is carried out in the electrodialysis device according to embodiment 3.
37. The process according to embodiment 36,wherein the aqueous stream comprising MOH removed from the membrane stack is at least partially recirculated into the membrane stack, preferably via the aqueous stream, and wherein the aqueous stream comprising HA removed from the membrane stack is at least partially recirculated into the membrane stack, preferably via the aqueous stream comprising MA.
38. The process according to embodiment 36, wherein the aqueous stream comprising MOH removed from the membrane stack is not recirculated into the membrane stack, and wherein the aqueous stream comprising HA removed from the membrane stack is not recirculated into the membrane stack.
39. The process according to embodiment 36, wherein the aqueous stream comprising MOH removed from the membrane stack is not recirculated into the membrane stack, and wherein the aqueous stream comprising HA removed from the membrane stack is at least partially recirculated into the membrane stack, preferably via the aqueous stream comprising MA.
40. The process according to embodiment 39, wherein the acid HA is an acid having one or more pKa values with at least one pKa value being in the range of from 2 to 7 and the salt MA has a calcium stability constant pCa of at least 5, wherein the salt MA is present in the aqueous stream comprising MA in an amount in the range of from 20 to 100 %, preferably in the range of from 75 to 100 %, more preferably in the range of from 85 to 100 %, more preferably in the range of from 95 to 100 % of its solubility at 5 °C, and wherein from 1 kg of the alkali metal salt MA, at least 350 g, preferably at least 400 g MOH, are produced.
41. The process according to embodiment 39, wherein an aqueous stream comprising at least 2 Bronsted acids HA is produced, wherein at least 1 Bronsted acid HA has at least one pKa value in the range of from 2 to 7 and at least one salt MA has a calcium stability constant pCa of at least 5, wherein at least one of the salts MA, preferably each of the salts of MA is present in the aqueous stream (S1) in an amount in the range of from 20 to 100 %, preferably in the range of from 75 to 100 %, more preferably in the range of from 85 to 100 %, more preferably in the range of from 95 to 100 % of its solubility at 5 °C, and wherein at least 2 alkali metal salts MA are comprised in the aqueous stream comprising MA, M preferably being the same in the at least 2 alkali metal salts MA, wherein from 1 kg of the alkali metal salts MA, at least 350 g, preferably at least 400 g MOH, are produced.
42. The process according to embodiment 40 or 41, wherein M comprises, preferably is Na.
43. The process according to any one of embodiments 20 to 35, wherein y is 3 and the process is carried out in the electrodialysis device according to any one of embodiments 4 to 6, preferably according to embodiment 6.
44. The process according to embodiment 43, wherein the aqueous stream comprising MA removed from the membrane stack is at least partially recirculated into the membrane stack, preferably via the aqueous stream comprising MA.
45. The electrodialysis device according to embodiment 44, wherein the aqueous stream comprising MOH removed from the membrane stack is not recirculated into the membrane stack, and wherein the aqueous stream comprising HA removed from the membrane stack is not recirculated into the membrane stack.
46. The process according to any one of embodiments 20 to 45, wherein the aqueous electrolyte stream comprises one or more of NaOH, H₂SO₄, NaNO₃, and at least one of the at least one salt MA, preferably one or more of NaOH, H₂SO₄, NaNO₃, Na₂SO₄, and trisodium citrate.
47. The process according to any one of embodiments 20 to 46, wherein the cross flow velocity of the electrolyte stream in the electrodialysis device is in the range of from 0.1 to 20 cm/s, preferably in the range of from 0.2 to 5 cm/s, more preferably in the range of from 0.5 to 1 cm/s.

The present invention is further illustrated by the following Reference Examples and Examples.

### Examples

### Reference Example 1: Determination of the pCa values

In Reference Example 1, determination of the calcium stability constant pCa of the salt MA is described. The calcium stability constants may be determined by using potentiometric titrations using glass electrodes, such as exemplary described in: H. Hyvönen et al., "Studies on biodegradable chelating ligands: complexation ofiminodisuccinic acid (ISA) with Cu(II), Zn(II), Mn(II) and Fe(III) ions in aqueous solution ", Green Chemistry, 2003, 5, 410-414.

### Example 1: Electrodialysis device with the bipolar membrane stack in the 2-cell stack being operated in the semi-batch operation mode

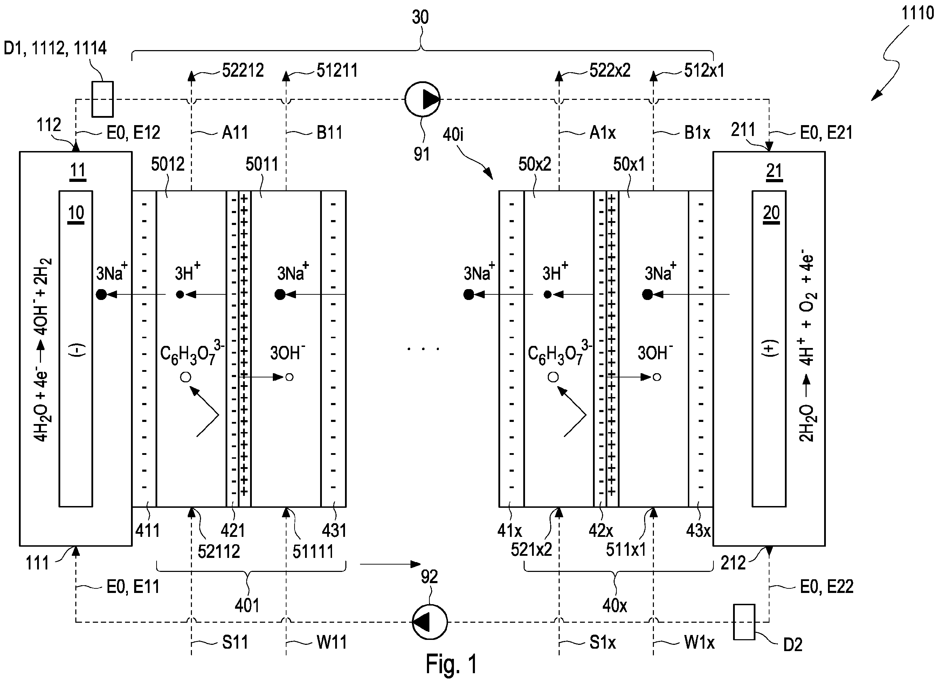

In Example 1, the electrodialysis device is embodied as shown in Figure 1. Thus, reference for the description of the electrodialysis device is made to the description of Figure 1. The cation exchange membranes were "PC SK" membranes, i.e. polyester reinforced membranes having sulfonic acid groups. The cation exchange membranes separating the bipolar membrane stack from the cathode chamber and the anode chamber were "PC SC" membranes, i.e. polyvinylchloride reinforced membranes having sulfonic acid groups. The bipolar membranes were "PC bip" membranes, i.e. membranes comprising a cation exchange membrane layer made of a polyester reinforced membrane comprising sulfonic acid groups and an anion exchange membrane layer made of polyester reinforced membranes comprising ammonium groups.

The bipolar membrane stacked comprised a number of 20 cell arrays (x = 20). The electrode area of the bipolar membrane stack was 200 cm². The cathode electrode was made of V4A steel. The anode electrode was made of platinum/iridium coated titanium. The aqueous electrolyte stream comprised 5 wt% of Na₂SO₄ within a volume of 0.5 L. The flow rate used for recirculating the aqueous electrolyte stream was 12 L/h.

The aqueous stream comprising MA was a solution of 350 g/L of sodium citrate. The aqueous stream comprising MOH comprised sodium hydroxide. The aqueous stream comprising HA comprised citric acid. The flow rate of the aqueous stream comprising MA was 12 L/h, corresponding to the flow rate of the aqueous stream comprising HA removed from the bipolar membrane stack. The flow rates of the aqueous stream were 4, 5 and 6 L/h, corresponding to the flow rates of the aqueous stream comprising MOH removed from the bipolar membrane stack. The electric current densities in the electrodialysis device were 100, 200, 300, 350 and 400 A/m² at an electric voltage below 42 V.

According to Table 1, various combinations of applied electric current densities and flow rates resulted in the production of more than 3 g/min of sodium hydroxide:

**Table 1**

| The electrical conductivity (EC) of the aqueous stream comprising MOH, NaOH concentration (Conc.) and NaOH production (Prod.) for various combinations of applied electric current densities and flow rates. | | | | | | | | | |
|---|---|---|---|---|---|---|---|---|---|
| | 4 L/h | | | 5 L/h | | | 6 L/h | | |
| | EC | Conc. | Prod. | EC | Conc. | Prod. | EC | Conc. | Prod. |
| | mS/cm | mol/L | g/min | mS/cm | mol/L | g/min | mS/cm | mol/L | g/min |
| 100 A/m² | 84 | 0.4 | 1.2 | 75 | 0.4 | 1.3 | -- | -- | -- |
| 200 A/m² | 145 | 0.8 | 2.0 | 125 | 0.7 | 2.2 | 102 | 0.5 | 2.1 |
| 300 A/m² | 191 | 1.0 | 2.7 | 163 | 0.9 | 2.8 | 134 | 0.7 | 2.8 |
| 350 A/m² | 205 | 1.1 | 2.9 | -- | -- | -- | 159 | 0.8 | 3.3 |
| 400 A/m² | 220 | 1.2 | 3.1 | 163 | 1.0 | 3.2 | 181 | 0.9 | 3.8 |

### Example 2: Electrodialysis device with sodium citrate (NaC)

In example 2, the electrodialysis device is embodied and operated according to Example 1. The aqueous stream comprising MA was a solution of 35 wt% sodium citrate, corresponding to 540 g/L of sodium citrate in the aqueous stream comprising MA. The bipolar membrane stack comprised a number of 20 cell arrays (x = 20). The electrode area of the bipolar membrane stack was 200 cm². The applied electric current densities were 300, 350, 400 and 450 A/m², corresponding to 6, 7, 8 and 9 A. The flow rate of the aqueous stream were 4, 5, 6, 7 and 8 L/h, corresponding to the flow rate of the aqueous stream comprising MOH removed from the bipolar membrane stack.

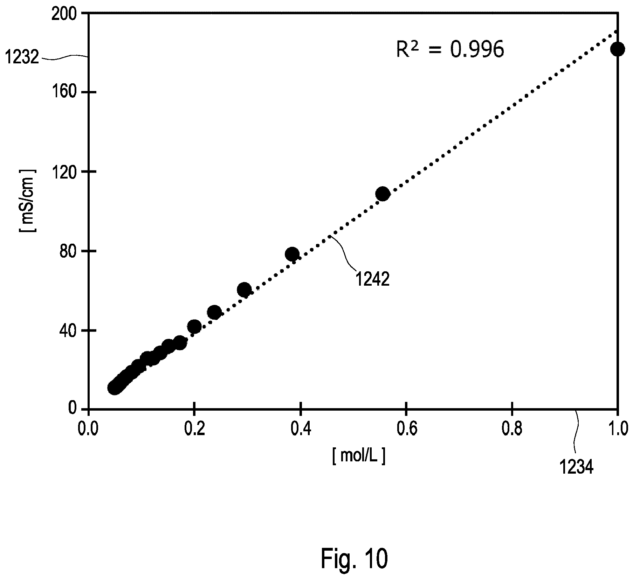

The experiments were executed in the semi-batch operation mode, i.e. the aqueous stream comprising MA was recirculated, whereas the aqueous stream supplied to the bipolar membrane stack was passed once through the membrane stack and left as the aqueous stream comprising NaOH. The concentration of NaOH was determined based on the measured electrical conductivity (EC) and a calibration line of the NaOH concentration as a function of the EC (as can be exemplarily seen in Figure 10). In this example, a 100 g/L sodium citrate solution was used as the aqueous electrolyte stream. The flow rate of the recirculated aqueous stream comprising MA and of the aqueous electrolyte stream was 12 L/h. Finally, the applied electric voltage was limited to 42 V.

Table 2 shows the obtained NaOH concentrations in the base as a function of the applied electric current density and the flow rate of the aqueous stream. According to the results, the NaOH concentration increases when the electric current density increases, which is caused by the increased sodium transport and water dissociation rate. When the flow rate of the aqueous stream remains constant and the sodium transport and water dissociation rate increase, the NaOH concentration increases. Furthermore, for a certain electric current density, the NaOH concentration decreases as a function of the increasing flow rate of the aqueous stream. Because the sodium transport and water dissociation rate are constant and the flow rate of the aqueous stream increases, the NaOH becomes more diluted, resulting in a decrease in the NaOH concentration.

**Table 2**

| The NaOH concentration in the aqueous stream comprising MOH as a function of the electric current density and the flow rate of the aqueous stream. | | | | | | |
|---|---|---|---|---|---|---|
| | Flow rate of the aqueous stream | | | | | |
| Electric Current (Density) | Unit | 4 L/h | 5 L/h | 6 L/h | 7 L/h | 8 L/h |
| 6 A (300 A/m²) | mol/L | 0.8 | 0.7 | 0.6 | 0.6 | 0.5 |
| 7 A (350 A/m²) | mol/L | 0.9 | 0.8 | 0.7 | 0.6 | 0.6 |
| 8 A (400 A/m²) | mol/L | 1.1 | 0.9 | 0.8 | 0.7 | 0.6 |
| 9A (450 A/m²) | mol/L | 1.1 | 0.9 | 0.8 | 0.7 | 0.6 |

By multiplying the flow rate (L/h) of the aqueous stream and the NaOH concentration (mol/L or g/L), the NaOH production rate (g/min) was determined. For 7, 8 and 9 A, it was possible to produce 3 g/min. However, for 7 A, the flow rate of the aqueous stream must be at least 8 L/h to achieve 3 g/min. For 8 and 9 A, a flow rate of the aqueous stream of 5, 6, 7 and 8 L/h must be used to achieve a NaOH production rate of 3 g/min.

In addition, the stability of the NaOH production while the aqueous stream comprising MA is converted from sodium citrate to citric acid was assessed. An electric current of 8 A and a flow rate of the aqueous stream of 8 L/h was used. The expected NaOH production should be 3.5 g/min according to above-mentioned results. These conditions were selected to allow for some error margin for the production of 3.0 g/min.

The results of the EC of the recirculated aqueous stream comprising MA and of the once-through passed aqueous stream comprising MOH were the following: After an initial start-up period of 3 minutes, the EC of the aqueous stream comprising MOH was stable at 120 mS/cm, which corresponds to 0.6 mol/L, in line with Table 2. The start-up period was caused by a wash-out of clean water that was still in the tubes. The EC of the aqueous stream comprising MA decreased steadily over time, indicating the gradual conversion of sodium citrate to citric acid. Because sodium was removed from the aqueous stream comprising MA, the NaOH concentration decreased after 25 minutes. When taking both the start-up period and the decline at the end of the experiment into account, the average NaOH production was 3 g/min. Eventually, 83% of the sodium was converted to NaOH, based on a sodium mass balance. When only the steady production is taken into account, the NaOH production rate was 3.5 g/min, in line with above-mentioned results. The average applied electric voltage throughout the experiment was 35 V. The current efficiency (efficiency to use the supplied electricity to transport sodium and dissociate water) of the whole experiment was 81% and the energy consumption was 1.4 kWh/kg-NaOH produced. The results show that steady NaOH production at a rate of 3 g/min can be achieved by converting sodium citrate to citric acid using the electrodialysis device according to the present invention.

### Example 3: Electrodialysis device with trisodium citrate (NaC) or trisodium dicarboxymethyl alaninate (Na₃-MGDA) or a mixture thereof

In example 3, the electrodialysis device is embodied and operated according to Example 1. The aqueous stream comprising MA comprised trisodium citrate (NaC) or trisodium dicarboxymethyl alaninate (Na₃-MGDA) or a mixture thereof. The aqueous stream comprising MOH comprised sodium hydroxide (NaOH).

Initially, NaC and Na₃-MGDA (100%) were used for the preparation of the initial aqueous stream comprising MA. Subsequently, mixtures of NaC and Na₃-MGDA were also prepared to produce NaOH by bipolar membrane electrodialysis. The following compositions were prepared, of which the % represents the mass ratio of the total salt mixture: 100% NaC, 100% Na₃-MGDA, 75% NaC with 25% Na₃-MGDA, 50% NaC with 50% Na₃-MGDA and 25% NaC with 75% Na₃-MGDA.

To assess the performance to produce NaOH from the various mixtures of salts, the stability and production rate of NaOH, the conversion efficiency (sodium as produced NaOH compared to initially present sodium in the aqueous stream comprising MA) and the current efficiency (efficiency of using the supplied electrons to produce NaOH) were determined.

The bipolar membrane stack had an electrode area of 64 cm². The bipolar membrane stack comprised a number of 10 cell arrays (x = 10). The electrodialysis device was operated in the semi-batch operation mode, i.e. the aqueous stream comprising MA was recirculated, whereas the aqueous stream was passed once through the bipolar membrane stack and was removed as the aqueous stream comprising NaOH. The pH and electrical conductivity (EC) of the aqueous stream were continuously logged to determine the stability of NaOH production for each mixture of salt, wherein the recirculated aqueous stream comprising MA became acidic throughout the experiments. Furthermore, during the experiments, the electric voltage and the electric current density were continuously logged to determine the current efficiency. The aqueous electrolyte stream comprised a solution of 100 g/L NaC. The applied electric current density was 400 A/m², corresponding to an applied electric current of 2.56 A due to the smaller electrode area. The maximum applied electric voltage was limited to 42 V. Furthermore, the flow rate of the aqueous stream was 3.5 L/h, corresponding to the flow rate of the aqueous stream comprising MOH removed from the bipolar membrane stack. The flow rate of the aqueous stream comprising MA, corresponding to the flow rate of the aqueous stream comprising HA removed from the bipolar membrane stack, and the flow rate of the aqueous electrolyte stream were 12 L/h.

The EC and pH of the aqueous stream comprising MOH and of the aqueous stream comprising MA during the production of NaOH from 100% NaC showed the following: Both the EC and pH of the aqueous stream comprising MA decreased steadily, while the EC of the aqueous stream comprising MOH (representative for the NaOH concentration) remained steady until 108 min. At this point, the EC of the aqueous stream comprising MOH started to decrease, indicating that steady MOH production could not be maintained. The point where the EC of the aqueous stream comprising MOH starts to decrease is referred to as the "infliction point". The NaOH concentration in the aqueous stream comprising MOH decreased because protons (H⁺) were transported increasingly from the aqueous stream comprising MA to the aqueous stream comprising MOH, leading to the neutralization of the produced hydroxide ions (OH⁻). This phenomenon becomes more apparent when the pH of the aqueous stream comprising MA (an indicator of the H⁺-concentration) decreases and when the majority of sodium ions is removed from the aqueous stream comprising MA. To compare the various salt mixtures, the conversion efficiency and current efficiency were determined at the infliction point, i.e. at the point when the steady NaOH production could not be maintained anymore due to competitive proton transport.

**Table 3**

| An overview of the performance indicators for the production of NaOH from various salt mixtures comprising NaC and/or Na₃-MGDA. | | | | | | |
|---|---|---|---|---|---|---|
| | unit | 100% NaC | 100% Na₃-MGDA | 75% NaC - 25% Na₃-MGDA | 50% NaC - 50% Na₃-MGDA | 25% NaC - 75% Na₃-MGDA |
| Infliction Point EC | min | 108 | 98 | 106 | 98 | 105 |
| NaOH Production Rate | g/h | 0.57 | 0.53 | 0.54 | 0.55 | 0.52 |
| Conversion Efficiency | - | 92% | 73% | 85% | 78% | 77% |
| Current Efficiency | - | 89% | 84% | 85% | 87% | 82% |

Table 3 presents an overview of the infliction points for the various tested salt mixtures. Also, the NaOH production rate, the conversion efficiency and the current efficiency are presented. Based on the results, the NaOH production rates for all salt mixtures were similar: 0.54 ± 0.03 g/h. However, 100% NaC resulted in the highest conversion efficiency until the infliction point was reached: 92%. Also, the highest current efficiency was achieved: 89%.

On the other hand, 100% Na₃-MGDA resulted in the lowest conversion efficiency: 73%. In contrast to 100% NaC, for 100% Na₃-MGDA, the pH of the aqueous stream comprising MA did not decrease gradually, but initially decreased gradually over time from -10 to ∼8 in 38 min and then steeply decreased to ∼3 in 9 min. The different trend of the pH of the aqueous stream comprising MA for the different salt mixtures is caused by the various acid-base equilibrium constants of citrate and Na₃-MGDA. Because the pH of the aqueous stream comprising MA for 100% Na₃-MGDA reached lower values faster than 100% NaC, competitive proton transport occurred earlier and more significant, which eventually caused an earlier infliction point at a lower conversion efficiency (73%). Hence, NaOH production from 100% Na₃-MGDA was feasible, but at a lower conversion efficiency and current efficiency compared to 100% NaC. Furthermore, during the conversion of 100% Na₃-MGDA, also an unusual trend for the EC of the aqueous stream comprising MA was observed. Initially, the EC increased to approximately 60 mS/cm and after a peak at approximately 340 g/L, the EC decreased steadily. The initial increase in EC of the aqueous stream comprising MA was caused by dilution of the aqueous stream comprising MA. The EC of the aqueous stream comprising MA was found to increase as a function of the Na₃-MGDA concentration with a peak at a concentration of approximately 340 g/L. Subsequently, when the Na₃-MGDA concentration further increases, the EC of the aqueous stream comprising MA decreases. Hence, the initial increase in EC of the aqueous stream comprising MA with 100% Na₃-MGDA was caused by dilution, whereas the EC of the aqueous stream comprising MA subsequently decreased after a peak due to further dilution.

The production rates, conversion efficiencies and current efficiencies for mixtures of NaC and Na₃-MGDA are also presented in Table 3. From the results, the following can be concluded: The higher the fraction of NaC compared to Na₃-MGDA, the higher the conversion efficiency and current efficiency of producing NaOH. The higher the fraction of NaC in the aqueous stream comprising MA, the more similar the trend of the EC and pH to 100% NaC and vice versa for Na₃-MGDA.

### Example 4: Electrodialysis device with sodium sulfate

In example 4, the electrodialysis device is embodied and operated according to Example 1. The aqueous stream comprising MA comprises sodium sulfate (Na₂SO₄).

### Brief description of the Figures

Identical reference numbers in these Figures refer to identical or functionally comparable elements.

In the Figures:
- Figure 1: shows a first embodiment of an electrodialysis device in a schematic view;
- Figure 2: shows a second embodiment of an electrodialysis device in a schematic view;
- Figures 3A to 3C: show different operation modes of an electrodialysis device;
- Figures 4 to 7B: show diagrams of an evolution of pH values (Figures 4, 5B, 6A and 7A) and of electrical conductivity (Figures 5A, 6B and 7B) of the aqueous stream comprising HA and of an aqueous stream comprising MOH during operation of an electrodialysis device;

- Figures 8A to 9D: show diagrams of sodium hydroxide concentrations in an aqueous stream comprising MOH (Figures 8A and 9A), sodium hydroxide production rate (Figures 8B and 9B), energy consumption (Figures 8C and 9C) and conversion efficiency (Figures 8D and 9D) as a function of an amount of salt comprised in the aqueous stream comprising MA and of an applied electric current density;
- Figure 10: shows a diagram of electrical conductivity of an aqueous stream comprising MOH as a function of MOH concentration;
- Figures 11A and 11B: show diagrams of an evolution of electrical conductivity of an aqueous stream comprising MOH (Figure 11A) and of pH value of an aqueous stream comprising HA (Figure 11B) for two different salts as a function of time; and
- Figure 12: shows a flow chart of a process for simultaneously producing an aqueous stream comprising an alkali metal hydroxide MOH and an aqueous stream comprising a Bronsted acid HA.

### Detailed description of the embodiments

Figure 1 shows a first exemplary embodiment of an electrodialysis device 1110 in a schematic view. The electrodialysis device 1110 is configured for simultaneously producing an aqueous stream B1 comprising an alkali metal hydroxide MOH and an aqueous stream S1 comprising a Bronsted acid HA. The electrodialysis device 1110 comprises a cathode 10 arranged in a cathode chamber 11, an anode 20 arranged in an anode chamber 21, and a bipolar membrane stack 30 arranged between the anode chamber 21 and the cathode chamber 11.

The bipolar membrane stack 30 comprises x cell arrays 40i, i=1...x, arranged in series between the cathode chamber 11 and the anode chamber 21. Each cell array 40i consists of y cells 50ik, k=1...y, and is defined by a first cation exchange membrane 41i at the cathode side of the cell array, a second cation exchange membrane 43i at the anode side of the cell array 40i and a bipolar membrane 42i arranged between the first cation exchange membrane 41i and the second cation exchange membrane 43i.

A cell 50ik which is defined by the bipolar membrane 42i and the second cation exchange membrane 43i comprises inlet means 511ik for passing an aqueous stream W1i into said cell 50ik and outlet means 512ik for removing an aqueous stream B1i comprising MOH from said cell 50ik. A cell 50ik which is defined at its cathode side by the first cation exchange membrane 41i comprises inlet means 521ik for passing an aqueous stream S1i comprising an alkali metal salt MA of the acid HA, into said cell 50ik. A cell 50ik which is defined at its anode side by the bipolar membrane 42i comprises outlet means 522ik for removing an aqueous stream A1i comprising HA from said cell 50ik.

In the exemplary embodiment shown in Figure 1, y is 2 and x ≥ 1. Thus, in this example, each cell array 40i consists of two cells 50ik, i.e. a first cell 50i1 and a second cell 50i2. This configuration of the bipolar membrane stack 30 may specifically be referred to as "two-cell stack". The first cell 50i1 may be defined by the bipolar membrane 42i and the second cation exchange membrane 43i. The first cell 50i1 may comprise inlet means 511i1 for passing the aqueous stream W1i into said cell and outlet means 512i1 for removing the aqueous stream B1i comprising MOH from said cell. The second cell 50i2 may be defined by the first cation exchange membrane 41i1 and the bipolar membrane 42i. The second cell 50i2 may comprise the inlet means 521i2 for passing the aqueous stream A1i comprising MA into said cell and the outlet means 522i2 for removing the aqueous stream A1i comprising HA from said cell.

As an example, the aqueous streams S1i, A1i being passed through the second cell 50i2 may be recirculated. Recirculating the aqueous streams S1i, A1i through the second cell 50i2 may comprise passing at least a part of the aqueous stream A1i comprising HA as the aqueous stream S1i comprising MA into the second cell 50i2. Thus, the aqueous stream S1i comprising MA being passed into the second cell 50i2 may comprise the salt MA in the beginning of using the electrodialysis device 1110. Upon further circulating the aqueous streams S1i, A1i through the second cell 50i2, the aqueous stream S1i comprising MA may comprise both, the salt MA and the acid HA. An amount of the acid HA in the aqueous stream S1i, A1i being circulated through the second cell 50i2 may increase with repeated circulation, whereas an amount of the salt MA may decrease. However, other examples of passing the aqueous streams S1i, A1i through the second cell 50i2 are also feasible, such as a single pass through, as will be outlined in further detail below.

The bipolar membrane stack 30 further comprises:
- inlet means 311 (not shown in Figure 1) for passing an aqueous stream W1 to the membrane stack 30; and outlet means 314 (not shown in Figure 1) for removing the aqueous stream B1 comprising MOH from said membrane stack 30;
- inlet means 321 (not shown in Figure 1)for passing an aqueous stream S1 comprising MA to the membrane stack 30; and outlet means 324 (not shown in Figure 1) for removing the aqueous stream A1 comprising HA from said membrane stack 30.

Further, as shown in Figure 1, x≥2, i.e. the bipolar membrane stack 30 may comprise at least two cell arrays 40i. The bipolar membrane stack 30 may further comprise:
- dividing means 312 (not shown in Figure 1) to divide the aqueous stream W1 into x aqueous streams W1i into the cells, i=1...x; and combining means 313 (not shown in Figure 1) for combining x aqueous streams B1i comprising MOH from the cells 50ik to obtain a combined aqueous stream B1 comprising MOH;
- dividing means 322 (not shown in Figure 1) to divide the aqueous stream S1 comprising MA into x aqueous streams S1i comprising MA into the cells, i=1...x; and combining means 323 (not shown in Figure 1) for combining x aqueous streams A1i comprising HA from the cells 50ik to obtain a combined aqueous stream A1 comprising HA.

Further, x may be in the range of from 1 to 200, preferably in the range of from 2 to 150, more preferably in the range of from 5 to 100, more preferably in the range of from 10 to 50. For example, for small scale, x may preferably be in the range of from 1 to 10, more preferably in the range of from 2 to 10, more preferably in the range of from 5 to 10. As another example, for large scale, x may preferably be in the range of from 20 to 100, more preferably in the range of from 25 to 150, more preferably in the range of from 50 to 100.

An electrode area of the bipolar membrane stack 30 may be in the range of from 1 to 10,000 cm², preferably in the range of from 10 to 5,000 cm², more preferably in the range of from 20 to 1,000 cm², more preferably in the range of from 50 to 300 cm². An area of the membranes, specifically of one or more of the cation exchange membranes 41i, 43i, the anion exchange membranes 44i and the bipolar membranes 43i, may correspond to the electrode area of the bipolar membrane stack 30, specifically may be at least as large as the electrode area of the bipolar membrane stack 30.

The first cation exchange membrane 41i may be an organic polymer-based cation exchange membrane comprising acidic functional groups, preferably strong acidic functional groups, more preferably sulfonic acid groups. The organic polymer may preferably comprise, more preferably may be one or more of a polyvinyl chloride polymer, a polystyrene polymer, a polyethylene polymer, a polysulfone polymer, a polyacrylate polymer, a polyamide polymer, and a polypropylene polymer. More preferably, the organic polymer may comprise, more preferably may be a polyvinyl chloride polymer.

The second cation exchange membrane 43i may be an organic polymer-based cation exchange membrane comprising acidic functional groups, preferably strong acidic functional groups, more preferably sulfonic acid groups. The organic polymer may preferably comprise, more preferably may be one or more of a polyvinyl chloride polymer, a polystyrene polymer, a polyethylene polymer, a polysulfone polymer, a polyacrylate polymer, a polyamide polymer, and a polypropylene polymer. More preferably, the organic polymer may comprise, more preferably may be a polyvinyl chloride polymer.

The bipolar membrane 42i may comprise, preferably may be a bilayered membrane comprising an anion exchange membrane and a cation exchange membrane. The anion exchange membrane may preferably comprise, more preferably may be an anion exchange membrane as defined in context of the present invention. The cation exchange membrane may preferably comprise, more preferably may be a cation exchange membrane as defined in the context of the present invention, such as defined in the context of the first cation exchange membrane 41i and/or of the second cation exchange membrane 43i. As an example, in case x>1, the cation exchange membranes 41i, 43i comprised by one or more of the cell arrays 40i of the bipolar membrane stack 30 and the bipolar membranes 43i may be the same or different cation exchange membrane, preferably the same cation exchange membranes.

As shown in Figure 1, the cathode chamber 11 may comprise inlet means 111 for passing an aqueous electrolyte stream E11 into said chamber and outlet means 112 for removing an aqueous electrolyte stream E12 from said chamber. The anode chamber 21 may comprise inlet means 211 for passing an aqueous electrolyte stream E21 into said chamber and outlet means 212 for removing an aqueous electrolyte stream E22 from said chamber. The electrodialysis device 1110 may further comprise means 91, also referred to as "means for passing the aqueous electrolyte stream from the cathode chamber into the anode chamber", for passing the aqueous electrolyte stream E12 from the cathode chamber 11 from the outlet means 211 as the aqueous electrolyte stream E21 into the anode chamber 21 to the inlet means 211, specifically to the inlet means 211 of the anode chamber 11. The electrodialysis device 1110 may further comprise means 92, also referred to as "means for passing the aqueous electrolyte stream from the anode chamber into the cathode chamber", for passing the aqueous electrolyte stream E22 from the anode chamber 21 from the outlet means 212 as the aqueous electrolyte stream E11 into the cathode chamber 11 to the inlet means 111, specifically to the inlet means 111 of the cathode chamber 11. Either the means 91, specifically the means 91 for passing the aqueous electrolyte stream E12 from the cathode chamber 11 into the anode chamber 21, and/or the means 92, specifically the means 92 for passing the aqueous electrolyte stream E22 from the anode chamber 21 into the cathode chamber 11, may comprise inlet means 93 (not shown in Figure 1) for passing an aqueous electrolyte stream E0 into either the means 91, specifically into the means 91 for passing the aqueous electrolyte stream E12 from the cathode chamber 11 to the anode chamber 21, and/or the means 92, specifically into the means 92 for passing the aqueous electrolyte stream E22 from the anode chamber 21 into the cathode chamber 11.

Further, as schematically shown in Figure 1, the electrodialysis device 1110 may comprise degassing means D1 for removing H₂ and optionally one or more further gases from the aqueous electrolyte stream E12, specifically from the aqueous electrolyte stream E12 removed from the cathode chamber 11. The electrodialysis device 1110 may comprise degassing means D2 for removing O₂ and optionally one or more further gases from the aqueous electrolyte stream E22, specifically from the aqueous electrolyte stream E22 removed from the anode chamber 11.

The degassing means D1, specifically the degassing means D1 for removing H₂, may comprise a hydrogen combustion catalyst, wherein the hydrogen combustion catalyst may preferably be comprised in the form of a catalyst bed. Alternatively or additionally, the degassing means D1 for removing H₂ may use an open combusting of H₂ for removing the H₂, such as by using a sparking device. As another example, the degassing means D1 for removing H₂ may comprise a fuel cell using the removed H₂. As another example, the degassing means D1 for removing H₂ may comprise a fan configured for diluting the removed H₂ with the ambient air, specifically to a hydrogen level below an explosive level. Alternatively or additionally, the removed H₂ from the aqueous electrolyte stream E12 may be passed to a further device configured for safely removing exhaust gases.

The hydrogen combustion catalyst may comprise a platinum group metal, preferably one or more of Pt, Rh and Pd, more preferably Pd, the platinum group metal preferably being supported in an inert support material, preferably on an oxidic material comprising one or more of Al, Ti, and Si, more preferably Al, the oxidic material more preferably comprising alumina.

Further, the degassing means Dl, specifically the degassing means for removing H₂, may comprise a temperature measuring instrument 1112 for measuring the temperature in the catalyst bed. As an example, the temperature measuring instrument 1112 may comprise an resistance temperature sensor 1114, such as a Pt1000 or the like, and may be arranged in the catalyst bed. By measuring the temperature using the temperature measuring instrument 1112 in the catalyst bed, it may be possible to detect a correct functioning of one or more of the electrodialysis device 1110 and the degassing means D1 removing H₂. For example, in case the temperature measuring instrument 1112 may detect a temperature in the range of from 150 °C to 250°C, specifically in the range of from 180°C to 220°C, it may be possible to detect the correct functioning of the electrodialysis device 1110 and of the degassing means D1.

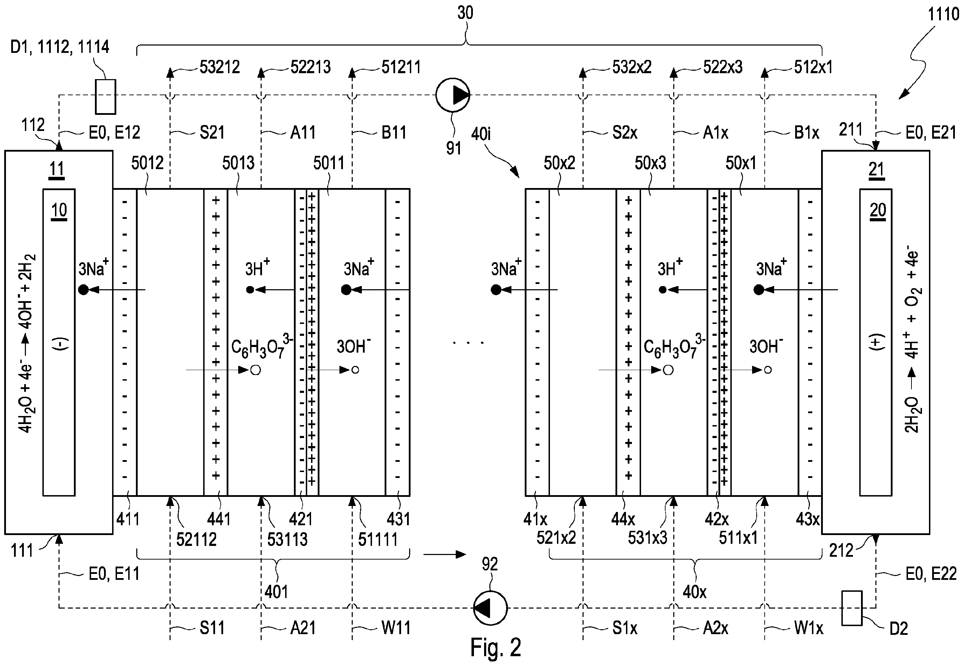

Figure 2 shows a second exemplary embodiment of the electrodialysis device 1110 in a schematic view. The embodiment of the electrodialysis device 1110 of Figure 2 may largely correspond to the embodiment of the electrodialysis device 1110 shown in Figure 1. Thus, reference may be made to the description of Figure 1.

However, as can be seen in Figure 2, y is 3. In this example, each cell array 40i consists of three cells, a first cell 50i1, a second cell 50i2 and a third cell 50i3. This configuration of the bipolar membrane stack 30 may specifically be referred to as "three-cell stack". The cell array 40i may further comprise an anion exchange membrane 44i which is arranged between the first cation exchange membrane 41i and the bipolar membrane 42i. The first cell 50i1 may be defined by the bipolar membrane 42i and the second cation exchange membrane 43i. The first cell 50i1 may comprise the inlet means 511i1 for passing the aqueous stream W1i into said cell and the outlet means 512i1 for removing the aqueous stream B1i comprising MOH from said cell. The second cell 50i2 may be defined by the first cation exchange membrane 41i and the anion exchange membrane 44i. The second cell 50i2 may comprise the inlet means 521i2 for passing the aqueous stream S1i comprising MA into said cell and outlet means 532i2. The third cell 50i3 may be defined by the anion exchange membrane 44i and the bipolar membrane 42i. The third cell 50i3 may comprise inlet means 531i3 and the outlet means 522i3 for removing the aqueous stream A1i comprising HA from said cell. The outlet means 532i2 of the second cell 50i2 may be an outlet means for removing an aqueous stream S2i comprising MA from the second cell 50i2. The inlet means 531i3 of the third cell 50i3 may be inlet means for passing an aqueous stream A21 comprising HA into the third cell 50i3. Alternatively, the aqueous stream A21 being passed into the third cell 50i3 via the inlet means 531i3 may comprise an aqueous medium, specifically in the beginning of the bipolar membrane electrodialysis. The electrolysis device 1110 may further comprising dividing means 315 (not shown in Figure 2) to divide an aqueous stream A2 comprising HA into x aqueous streams into the cells, i=1...x. The electrodialysis device 1110 may comprise combining means 325 (not shown in Figure 2) for combining x aqueous streams S2i comprising MA from the cells 50i2 to obtain a combined aqueous stream S2 comprising MA.

The anion exchange membrane 44i may be an organic polymer-based anion exchange membrane comprising nitrogen- and/or non-nitrogen based functional groups. The nitrogen based functional groups preferably may comprise one or more of quarternary ammonium groups, benzimidazolium groups, guanidinium groups and pyridinium groups. The non-nitrogen based functional groups preferably may comprise one or more of phosphonium group and sulfonium groups. More preferably, the anion exchange membrane may be an organic polymer-based anion exchange membrane comprising nitrogen based groups, more preferably quarternary ammonium groups. The organic polymer may preferably comprise, more preferably may be one or more of a polyvinyl chloride polymer, a polystyrene polymer, a polyethylene polymer, a polysulfone polymer, a polyacrylate polymer, a polyamide polymer, and a polypropylene polymer. More preferably, the organic polymer may comprise, more preferably may be a polyvinyl chloride polymer. Specifically, the anion exchange membranes 44i comprised by one or more of the bipolar membrane stack 30 and the bipolar membrane 42i may be the same of different anion exchange membranes, preferably the same anion exchange membranes.

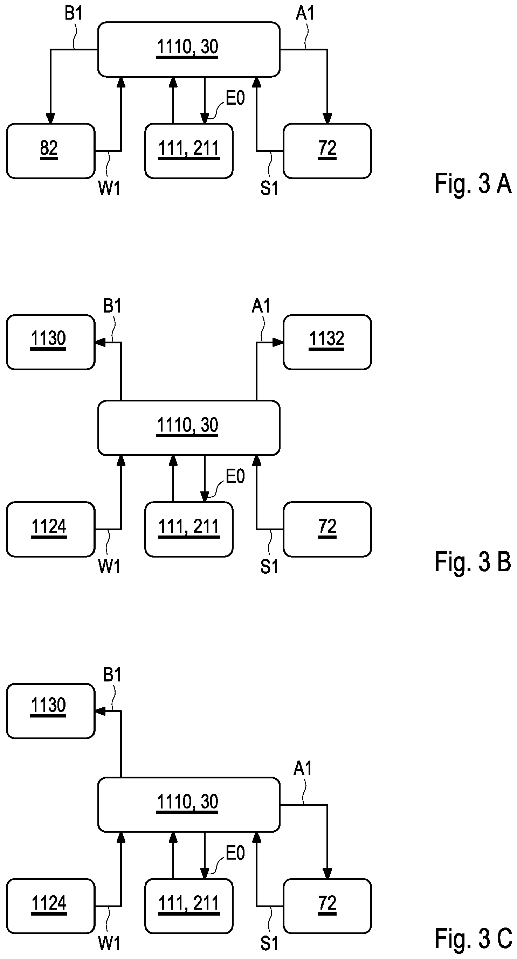

Figures 3A to 3C show schematically different operation modes of the electrodialysis device 1110. In a first operation mode, shown in Figure 3A, the aqueous streams as described above may be guided repeatedly through the bipolar membrane stack 30 of the electrodialysis device 1110, which is referred to as "batch operation mode". Specifically, the aqueous stream W1 may be passed from a buffer means 82 to the bipolar membrane stack 30 and the aqueous stream B1 comprising MOH may be passed back to the buffer means 82. The aqueous stream S1 comprising MA may passed from a buffer means 72 to the bipolar membrane stack 30 and the aqueous stream A1 comprising HA may be passed back to the buffer means 72. Thus, in the batch operation mode, the streams may be repeatedly circulated through the electrodialysis device 1110, specifically through the bipolar membrane stack 30. Thus, the aqueous stream W1 being repeatedly guided through the bipolar membrane stack 30 may at least partially comprise MOH and the stream S1 being repeatedly guided through the bipolar membrane stack 30 may at least partially comprise HA.

In a second operation mode, shown in Figure 3B, the streams may be guided only once through the bipolar membrane stack 30 of the electrodialysis device 1110, which is also referred to as "continuous operation mode". Specifically, the aqueous stream W1 may be passed from a container 1124 to the bipolar membrane stack 30 and the aqueous stream B1 comprising MOH may be passed forward to another container 1130, for example to an alkaline container, specifically being different from the container 1124. The aqueous stream S1 comprising MA may be passed from the buffer container 72 to the bipolar membrane stack 30 and the aqueous stream A1 comprising HA may be passed forward to a further container 1132, for example to an acidic container, specifically being different from the buffer means 72.

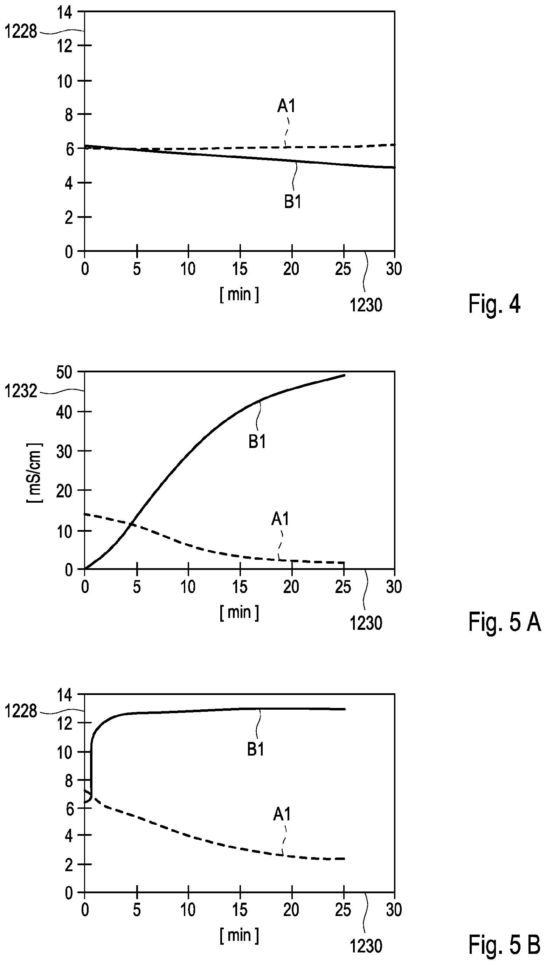

In a third operation mode, shown in Figure 3C, a part of the streams may be guided repeatedly through the bipolar membrane stack 30 of the electrodialysis device 1110, whereas the other part of the streams may be guided only once through the bipolar membrane stack 30, which is also referred to as "semi-batch operation mode". For example, the aqueous stream W1 may be passed from the container 1124 to the bipolar membrane stack 30 and the aqueous stream B1 comprising MOH may be passed forward to the container 1130. The aqueous stream S1 comprising MA may be passed from the buffer means 72 to the bipolar membrane stack 30 and the aqueous stream A1 comprising HA may be passed back to the buffer means 72. Thus, the stream S1 being repeatedly guided through the bipolar membrane stack 30 may at least partially comprise HA. However, other options for operating the electrodialysis device 1110, such as a circulating of the aqueous streams W1 and B1, as exemplarily shown in Figure 4A, and a once through flow of the aqueous streams S1 and A1, as exemplarily shown in Figure 4B, may also be feasible.

A possible drawback of the batch operation mode may rely in the fact that MOH may be able to diffuse back to the aqueous stream S1 comprising MA and/or to the aqueous stream A1 comprising HA, which will affect an energetic efficiency of the process. However, diffusion can be limited by avoiding the recirculation of the aqueous stream B1 comprising MOH, as for example in the continuous operation mode of Figure 3B and/or in the semi-batch operation mode of Figure 3C.

In the operation modes shown in Figures 3A to 3C, the aqueous electrolyte stream E0 of may be guided through the electrodialysis device 1110, specifically through the cathode chamber 11 and the anode chamber 21, in between the inlet means 111 and the inlet means 211.

Figure 4 shows an evolution of pH value 1228 of the aqueous stream B1 comprising MOH and the aqueous stream A1 comprising HA during operation of the electrodialysis device 1110 as a function of time 1230. In Figure 4, the embodiment of the electrodialysis device 1110 as explained in the context of Figure 2 may be used, specifically being operated in the batch operation mode as explained in the context of Figure 3A. In this example, the electrodialysis device 1110 may comprise 10 cell arrays 40i. The aqueous stream S1 comprising MA may contain 2 wt % of sodium citrate within a volume of 0.5 L. As generally applicable in the present application, the concentrations, generally, may include tolerances, e.g. relative tolerances of no more than 15%, specifically of no more than 10%, specifically of no more than 5%. The initial aqueous streams may contain RO permeate within a volume of 0.5 L. The aqueous electrolyte stream E0 may contain 5 wt% of Na₂SO₄ within a volume of 0.5 L. The aqueous streams may be recirculated at a flow rate of 12 L/h, which corresponds to a cross-sectional velocity in each cell array 40i of 1.2 cm/s.

An electric voltage of 20 V, corresponding to 2 V per cell array 40i, may be applied to achieve generation of MOH, specifically of sodium hydroxide, in the aqueous stream B1 comprising MOH and HA, specifically citric acid, in the aqueous stream A1 comprising HA. The electric current may amount to 0.04 A, corresponding to 6 A/m², indicating that the electrodialysis device 1110 may have an electrical resistance of about 500 Ω. The low electric current may be accompanied by negligible changes in the electrical conductivity and pH value 1228 of the aqueous streams A1 and B1, as can be seen in Figure 4. The resistance may indicate a slow transport of citrate ions through the anion exchange membranes 44i, as citrate may comprise a relatively large anion with a molecular weight of 192 g/mol compared to other inorganic anions such as chloride, sulfate and bicarbonate: 35 - 96 g/mol.

In Figures 5A and 5B, an evolution of electrical conductivity 1232 (Figure 5A) and of pH value 1228 (Figure 5B) of the aqueous stream B1 comprising MOH and the aqueous stream A1 comprising HA during operation of the electrodialysis device 1110 is shown as a function of time 1230. In these Figures, the exemplary embodiment of the electrodialysis device 1110 as explained in the context of Figure 1 may be used, being operated with same conditions as discussed with respect to Figure 4.

In contrast to the findings of Figure 4, the electric current may be in the range of 0.6 - 1.4 A, corresponding to 94 - 219 A/m², indicating transport of ions and dissociation of water. As can be seen in Figures 5A and 5B, the pH value 1228 of the aqueous stream B1 comprising MOH may rapidly increase and may reach a plateau at pH = 13.0, while the pH value of the aqueous stream A1 comprising HA may steadily decrease down to 2.38. In addition, the electrical conductivity 1232 in the aqueous stream B1 comprising MOH may increase from 0 to 49 mS/cm, while the electrical conductivity 1232 of the aqueous stream A1 comprising HA may decrease from 13 to 2 mS/cm. The increase in pH value 1228 and electrical conductivity 1232 in the aqueous stream B1 comprising MOH may represent a successful generation of MOH, specifically of sodium hydroxide, while the decrease in pH value 1228 and electrical conductivity 1232 in the aqueous stream A1 comprising HA may represent a conversion of the salt to acid, specifically of sodium citrate to citric acid. Thus, sodium hydroxide and citric acid solutions may be successfully produced from the aqueous stream comprising MA, specifically comprising sodium citrate, and RO permeate by using bipolar membrane electrodialysis in the electrodialysis device 1110. As a result of this operation, the initial sodium from the aqueous stream comprising MA may be completely transported to the aqueous stream B1 comprising MOH at an average transport flux of 1.27 g/m²/min. The energy consumption of producing sodium hydroxide from sodium citrate by using bipolar membrane electrodialysis may amount to 4 kWh/kgNaOH.

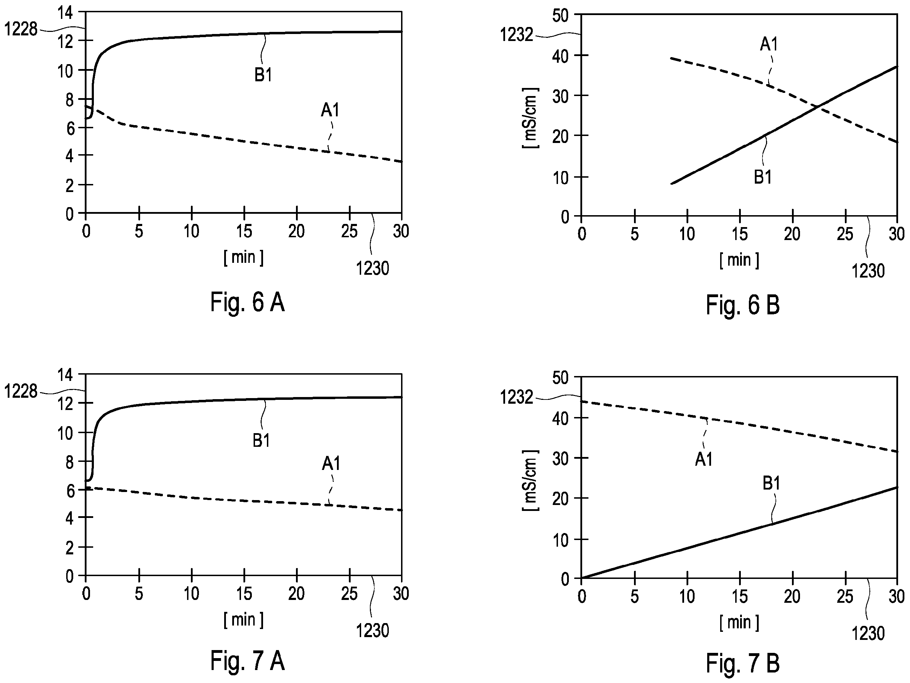

In Figures 6A and 6B, an evolution of electrical conductivity 1232 (Figure 6B) and of pH value 1228 (Figure 6A) of the aqueous stream B1 comprising MOH and the aqueous stream A1 comprising HA during operation of the electrodialysis device 1110 is shown as a function of time 1230. In these Figures, the exemplary embodiment of the electrodialysis device 1110 as explained in the context of Figure 1 may be used, being operated with similar conditions as discussed with respect to Figure 4. However, in the Figures 6A and 6B, a concentration of the salt in the aqueous stream S1 comprising MA may amount to 10 wt% of sodium citrate in a volume of 0.5 L and the aqueous electrolyte stream E0 may contain 5 wt% of Na₂SO₄ in a volume of 0.5 L. The volume of the initial aqueous streams may be increased to 2 L.

In the Figures 6A and 6B, a fixed electric voltage of 20 V, corresponding to 2 V per cell array 40i, may be applied to the electrodialysis device 1110. The high concentration of sodium citrate in the initial aqueous stream comprising MA may lower the electrical resistance of the electrodialysis device 1110 compared to the situation of Figure 4. The electric current for the application of the fixed electric voltage of 2 V per group of chambers 40i ranged from 0.6 - 2.6 A, corresponding to 94 - 406 A/m². The enhanced electrical current may represent a higher ion transport rates and, thus, the conversion rate of sodium citrate to sodium hydroxide and citric acid may increase when the concentration of sodium citrate in the initial aqueous stream S1 comprising MA is increased. As can be seen in Figures 6A and 6B, the pH value 1228 of the aqueous stream B1 comprising MOH may increase to 12.6, while the pH value 1228 of the aqueous stream A1 comprising HA may decrease to 4.1. The electrical conductivity 1232 of the aqueous stream B1 comprising MOH may increase to 46 mS/cm and the electrical conductivity 1232 of the aqueous stream A1 comprising HA may decrease from 38 to 10 mS/cm. During operation of the electrodialysis device 1110 with fixed electric voltage of 20 V, 38% of the sodium citrate may be converted to sodium hydroxide and citric acid at an average sodium flux of 1.9 g/m²/min.

In Figures 7A and 7B, an evolution of electrical conductivity 1232 (Figure 10B) and of pH value 1228 (Figure 10A) of the aqueous stream B1 comprising MOH and the aqueous stream A1 comprising HA during operation of the electrodialysis device 1110 is shown as a function of time 1230. In these Figures, the exemplary embodiment of the electrodialysis device 1110 as explained in the context of Figure 1 may be used, being operated with similar conditions as discussed with respect to Figures 6A and 6B. However, in the Figures 7A and 7B, a fixed electric current density of 200 A/m² may be applied to the electrodialysis device 1110.

In this embodiment, the conversion may be lower compared to the situation of Figures 6A and 6B with the fixed electric voltage of 2 V per group of chambers 40i, since the average current density may be found to be lower. As shown in Figures 7A and 7B, the pH value 1228 of the aqueous stream A1 comprising HA may decrease to 4.6 and the electrical conductivity 1232 of the aqueous stream A1 comprising HA may decrease from 43 to 31 mS/cm, indicating lower conversion. Accordingly, the pH value 1228 of the aqueous stream B1 comprising MOH may increase to 12.4 and the electrical conductivity 1232 of the aqueous stream B1 comprising MOH may increase to 21.5 mS/cm.

During operation of the electrodialysis device 1110 with fixed electric current density of 200 A/m², the conversion efficiency of sodium citrate may amount to 24% at an average sodium flux of 1.2 g/m²/min. The energy consumption may be in the range from 5 - 6 kWh/kg-NaOH produced.

Adapting these parameters but operating the electrodialysis device 1110 in the continuous operation mode, as exemplary shown in Figure 3B, the aqueous streams may be not recirculated through the electrodialysis device 1110, but pass the the electrodialysis device 1110 only once. In this embodiment, again 10 wt% of sodium citrate may be used in the initial aqueous stream comprising MA, while again RO permeate may be used as the initial aqueous stream W1. The flow rate may be set at 4 L/h per stream, corresponding to 0.4 cm/s. Various fixed current densities, ranging from 100 - 300 A/m² may be used resulting in a pH value of at least 12.5 for the produced aqueous stream B1 comprising MOH and at most 5.6 for the aqueous stream A1 comprising HA. An increase in applied electric current densities may result in both a higher electric potential per cell array 40i and an increase in pH value of the aqueous stream B1 comprising MOH. Throughout the continuous operation mode, the conversion efficiency may be in the range of from 8 - 10%, while the average sodium flux may range in between 1.5 - 1.9 g/m²/h. The energy consumption may be in the rage of 2 - 7 kWh/kg-NaOH produced.

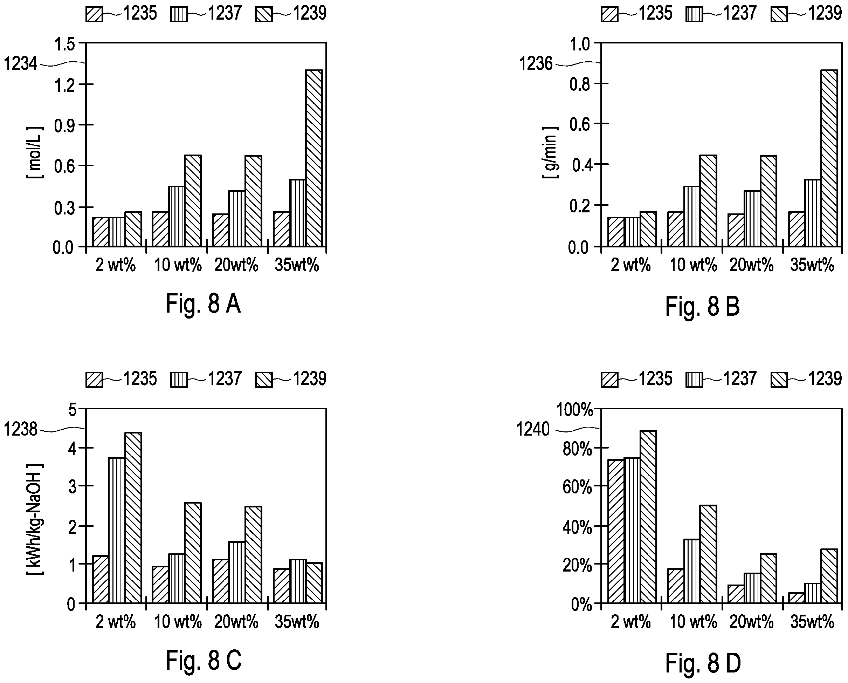

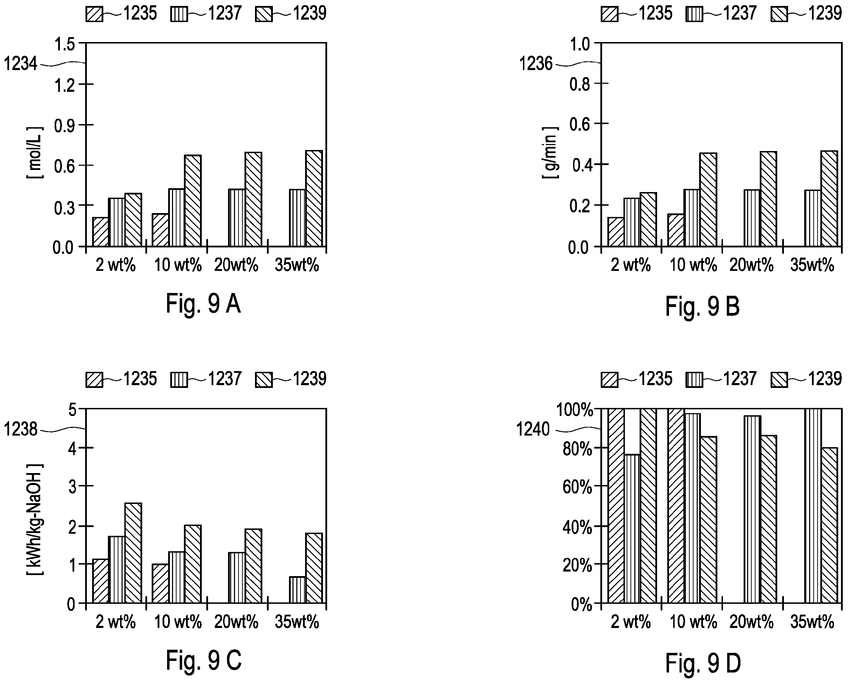

Figures 8A to 9D show diagrams of sodium hydroxide concentrations 1234 in the aqueous stream B1 comprising MOH (Figures 8A and 9A), sodium hydroxide production rate 1236 (Figures 8B and 9B), energy consumption 1238 (Figure 8C and 9C) and conversion efficiency 1240 (Figures 8D and 9D) as a function of an amount of salt comprised in the aqueous stream S1 comprising MA and as a function of applied electric current densities. The measurement values for 100 A/m² 1235, for 200 A/m² 1237 and for 400 A/m² are shown. In the Figures 8A to 9D, sodium citrate, specifically trisodium citrate, was used as the salt.

In the Figures 8A to 8D, the electrodialysis device 1110 according to the embodiment shown in Figure 1 may be used, specifically being operated in the continuous operation mode as explained with respect to Figure 3B. For the continuous operation mode, sodium citrate concentrations of 2, 10, 20 and 35 wt% and electric current densities of 100, 200 and 400 A/m² may be used. Since the aqueous steam A1 comprising HA and the aqueous stream B1 comprising MOH are not recirculated in this operation mode, low flow rates may be applied to allow for maximum transport of sodium from the aqueous stream S1 comprising MA, specifically comprising the sodium citrate, to the aqueous stream W1 to produce sodium hydroxide. By using low flow rates of the aqueous stream W1 through the electrodialysis device 1110, high concentrations of sodium hydroxide may be achieved. The aqueous stream S1 comprising MA, specifically comprising sodium citrate, and the aqueous stream W1 may be pumped through the electrodialysis device 1110 at a flow rate of 1 L/h, in order to maximize the residence time of both streams in the electrodialysis device 1110.

As shown in Figure 8A, higher sodium hydroxide concentrations 1234 in the aqueous stream B1 comprising MOH may be achieved when higher electric current densities are applied, since more sodium cations may be transported from the aqueous stream S1 comprising MA to the aqueous stream W1 and more hydroxide anions may be produced by the bipolar membranes 42i. The flow rate of the aqueous stream W1 may be fixed at 1 L/h and the sodium hydroxide production rate 1236 increased as a function of the applied current density, as shown in Figure 8B. Further, for 10, 20 and 35 wt% of sodium citrate, the sodium hydroxide concentrations 1234 in the aqueous stream B1 comprising MOH and the sodium hydroxide production rates 1236 may be similar for the same applied current densities, except for the peak at 35 wt% and 400 A/m². For 2 wt%, the sodium hydroxide concentrations 1234 in the aqueous stream B1 comprising MOH and the sodium hydroxide production rates 1236 may be lower, because insufficient sodium cations was supplied for this relatively low sodium citrate concentration. As can be seen in the Figures, for 10, 20 and 35 wt%, the sodium hydroxide concentration 1234 produced at 100 A/m² may be 0.2 mol/L, while the sodium hydroxide concentration 1234 may range in between 0.4 - 0.5 mol/L for 200 A/m² and 0.7 - 1.3 mol/L for 400 A/m². Thus, the sodium hydroxide concentration 1234 and sodium hydroxide production rates 1236 may increase linearly as a function of the applied current density. The energy consumption may range in between 1 - 4 kWh/kg-NaOH as can be seen in Figure 8C, which is lower compared to the batch operation modes as explained with regard to Figures 4 to 7B (4 - 6 kWh/kg-NaOH). Not wishing to be bound by theory, the higher applied current densities may result in higher sodium hydroxide production rates 1236 and in higher energy consumption 1238.

As shown in Figure 8D, the conversion efficiency 1240 may range in between 74 - 89% when a sodium citrate concentration of 2 wt% is used. However, the conversion efficiency 1240 may decrease to 18 - 49%, 8 - 24% and 5 - 28% when sodium citrate concentration of 10, 20 and 35 wt% are used, respectively. Similarly to sodium citrate concentrations and production rates of sodium hydroxide being a function of the electric current density, the conversion efficiency 1240 may increase as a function of the electric current density, since more sodium cations may be removed from the aqueous stream S1 comprising MA and may be converted to sodium hydroxide in the aqueous stream B1 comprising MOH. The decrease in conversion efficiency 1240 as a function of the increasing sodium citrate concentrations may be explained by a limited sodium cation transport when the aqueous stream S1 comprising MA is only circulated once through the electrodialysis device 1110. In order to transport all sodium cations from the concentrated aqueous stream S1 comprising the MA, an applied electric current densities higher than 1,500 A/m² may be required, which is not reasonable. However, including more cell array 40i in the bipolar membrane stack 30 to increase the conversion efficiency 1240 in continuous operation mode, may require to increase the electric voltage to values up over 100 V, which is also undesirable.

In the Figures 9A to 9D, the electrodialysis device 1110 according to the embodiment of Figure 1 may be used, specifically being operated in the semi-batch operation mode as explained with respect to Figure 3B. For the semi-continuous operation mode, again sodium citrate concentrations of 2, 10, 20 and 35 wt% and electric current densities of 100, 200 and 400 A/m² may be used. The initial volume of the aqueous stream S1 comprising MA, specifically comprising sodium citrate, may be 0.5 L. The flow rate of the aqueous stream W1 may be 1 L/h, in order to maximize the sodium hydroxide concentration, while the flow rate of the aqueous stream S1 comprising MA, specifically comprising sodium citrate, may be 12 L/h to allow for sufficient supply of sodium.

As shown in Figures 9A and 9B and in line with the situation of Figures 8A to 8D, the sodium hydroxide concentrations 1234 in the aqueous stream B1 comprising MOH and the sodium hydroxide production rates 1236 may increase as a function of the applied electric current density. For 100 A/m², the sodium hydroxide concentration 1234 in the aqueous stream B1 comprising MOH may amount to 0.2 mol/L, while for 200 and 400 A/m², the sodium hydroxide concentrations 1234 may increase to 0.4 mol/L and 0.7 mol/L, respectively. Thus, the semi-batch operation mode may be advantageously for obtaining high sodium hydroxide concentrations 1234 in the aqueous stream B1 comprising MOH and high sodium hydroxide production rates 1236 at high conversion efficiencies 1240. As shown in Figure 9C, the energy consumption 1238 for the semi-batch operation mode may also be comparable to the energy consumption for the continuous operation mode. The energy consumption 1238 may range from 1 - 3 kWh/kg-NaOH for the semi-batch operation mode.

Further, as can be seen in Figure 9D and in contrast to the continuous operation mode, the conversion efficiency 1240 of the semi-batch operation mode may be higher than 76%. The conversion efficiencies 1240 may range in between 76 - 121% and at 96% on average. The obtained conversion efficiencies 1240 above 100%, which is the theoretical maximum, can be explained by measurement errors in the mass balances for sodium hydroxide cations. However, the high conversion efficiencies 1240 achieved in the semi-batch operation mode, specifically with the achieved high sodium hydroxide concentrations 1234 and high sodium hydroxide production rates 1236 may indicate that the semi-batch operation mode may be suitable for achieving high sodium hydroxide concentrations 1234 and high sodium hydroxide production rates 1236 as well as high conversion efficiencies 1240.

Figure 10 shows a diagram of the electrical conductivity 1232 of the aqueous stream B1 comprising MOH as a function of the sodium hydroxide concentration 1234. As used through various exemplary embodiments described herein, the concentration of produced sodium hydroxide may be determined by a calibration 1242 of the sodium hydroxide concentration 1234 and a measured electrical conductivity 1232. To this end, various diluted samples of 1 M sodium hydroxide stock solution may be prepared and the corresponding electrical conductivity 1232 may be measured. Thus, the electrical conductivity 1232 of the aqueous stream B1 comprising MOH and/or any other aqueous streams may be used to determine the sodium hydroxide concentration 1234 contained therein by using the calibration 1242. Specifically, the electrical conductivity 1232 determined by one or more conductivity sensors may be used to determine the sodium hydroxide concentration 1234 contained in the corresponding aqueous stream by using the calibration 1242. As can be seen in Figure 10, the calibration comprises a linear relationship between sodium hydroxide concentration 1234 and the electrical conductivity 1232. Thus, this calibration 1242 may be used subsequently to determine the sodium hydroxide concentration 1234 in the aqueous stream B1 comprising MOH and/or in other aqueous streams.

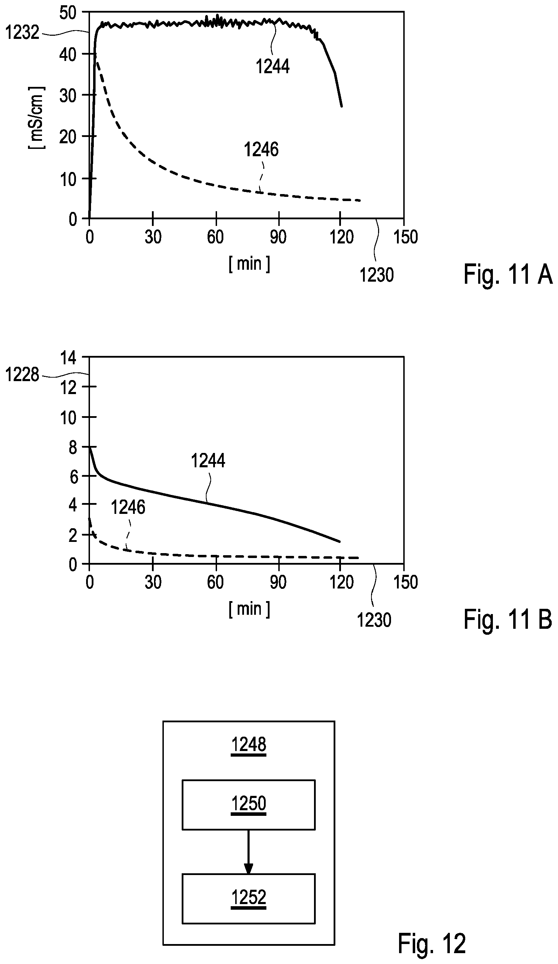

Figures 11A and 11B show diagrams of an evolution of the electrical conductivity 1232 of the aqueous stream B1 comprising MOH (Figure 11A) and of pH value of the aqueous stream A1 comprising HA (Figure 11B) for two different salts as a function of time 1230. In this example, the aqueous stream S1 comprising MA may comprise sodium citrate or sodium sulfate. Thus, measurement values for sodium citrate 1244 or for sodium sulfate 1246 are shown in Figures 11A and 11B. Therein, the electrodialysis device 1110 as shown in Figure 1 may be used, specifically being operated in the semi-batch operation mode.

The electrical conductivity 1232 of the aqueous stream B1 comprising MOH, shown in Figure 11A, may indicate the presence of sodium hydroxide. When using sodium citrate 1244, the production of sodium hydroxide may be steady and sufficiently high, until at approximately 100 minutes the salt may be almost completely converted to acid. As can be seen in Figure 11B, the pH value 1232 of the aqueous stream A1 comprising HA may gradually decrease. Thus, the present citrate ions may gradually bind with more protons.

In case the salt of the aqueous stream S1 comprising MA is sodium sulfate 1246, a different trend may be observed. The electrical conductivity 1232 of the aqueous stream B1 comprising MOH may decline rapidly, indicating that the sodium hydroxide may be neutralized by proton transport from the aqueous stream A1 comprising HA. As can be seen in Figure 11B, the pH value 1232 of the aqueous stream A1 comprising HA may also decrease rapidly, indicating a high concentration of protons in the aqueous stream A1 comprising HA.

Thus, using sodium citrate in the bipolar membrane electrodialysis may provide the following advantages. First, sodium citrate may be able to bind calcium. Secondly, citrate ions being present in the aqueous stream A1 comprising HA may be able to bind with generated protons, such as H⁺. Thus, citrate ions may be able to reduce free protons being present in the aqueous stream A1 comprising HA once the aqueous stream S1 comprising MA is converted to the aqueous stream A1 comprising HA. This binding of protons to the anion may also be referred to as the buffering effect.

However, using other inorganic salts, such as sodium sulfate, for producing sodium hydroxide in the two-cell stack configuration may not work as good as sodium citrate, since there is no buffering effect. Therefore, the protons may remain freely dissolved in the aqueous stream S1 comprising MA. The protons may compete with sodium to be transported to the aqueous stream B1 comprising MOH. In case the protons are transported to the aqueous stream B1 comprising MOH, specifically to the cell where hydroxide ions are introduced, there may be less production of sodium hydroxide because protons and hydroxide ions may recombine to water.

Thus, using inorganic non-buffering salt may not be suitable for the production of sodium hydroxide in the electrodialysis device 1110 with the configuration of the two-cell stack. Not wishing to be bound by theory, the observed behavior may also be valid for other inorganic non-buffering salts, such as sodium chloride and sodium nitrate.

Figure 12 shows a flow chart of an exemplary embodiment of a process 1248 for simultaneously producing the aqueous stream B1 comprising an alkali metal hydroxide MOH and the aqueous stream A1 comprising a Bronsted acid HA. The process is carried out in the electrodialysis device 1110 according to the present invention, such as according to any one of the embodiments disclosed in Figure 1 or 2. However, other embodiments of the electrodialysis device 1110 to be used in the process are also feasible.

The process 1248 may specifically comprise the steps of producing the aqueous stream B1 comprising MOH (denoted by reference number 1250) and of producing the aqueous stream A1 comprising HA (denoted by reference number 1252). The steps may specifically be performed simultaneously or in a timely overlapping fashion. Thus, it shall be noted, that the order of the process steps shown in Figure 12 is not of significance. Specifically, a different is also possible. Further, it is also possible to perform one or more of the process steps once or repeatedly. The process may comprise further steps which are not listed.

### List of reference numbers

- W1: aqueous stream
- W1i: aqueous streams into a cell
- B1: aqueous stream comprising MOH
- B1i: aqueous stream comprising MOH from a cell
- S1: aqueous stream comprising MA
- S1i: aqueous stream comprising an alkali metal salt MA of the acid HA into a cell
- S2: aqueous stream (S2) comprising MA
- S2i: aqueous stream (S2i) comprising MA from the cell (50i2)
- A1: aqueous stream comprising HA
- A1i: aqueous stream comprising HA from a cell
- A2: aqueous stream comprising HA
- A2i: aqueous stream (A2i) comprising HA into the cell (50i3)
- E0: aqueous electrolyte stream
- E11: aqueous electrolyte stream into cathode chamber
- E12: aqueous electrolyte stream from cathode chamber
- E21: aqueous electrolyte stream into anode chamber
- E22: aqueous electrolyte stream from anode chamber
- 10: Cathode
- 11: cathode chamber
- 20: Anode
- 21: anode chamber
- 30: bipolar membrane stack
- 40i: cell arrays
- 50ik: Cell
- 41i: first cation exchange membrane
- 42i: bipolar membrane
- 43i: second cation exchange membrane
- 44i: anion exchange membrane
- 511ik: inlet means for passing an aqueous stream (Wli) into a cell
- 512ik: outlet means for removing an aqueous stream (B1i) comprising MOH from said cell from a cell
- 521ik: inlet means for passing an aqueous stream (S1i) comprising an alkali metal salt MA of the acid HA into a cell
- 522ik: outlet means for removing an aqueous stream (A1i) comprising HA from a cell
- 311: inlet means for passing the aqueous stream (W1)
- 312: dividing means to divide the aqueous stream (W1)
- 313: combining means for combining x aqueous streams (B1i) comprising MOH from the cells
- 314: outlet means for removing the aqueous stream (B1) comprising MOH
- 315: dividing means to divide an aqueous stream (A2)
- 321: inlet means for passing an aqueous stream (S1) comprising MA
- 322: dividing means to divide the aqueous stream (S1) comprising MA
- 323: combining means for combining x aqueous streams (A1i) comprising HA
- 324: outlet means for removing the aqueous stream (A1) comprising HA
- 325: combining means for combining x aqueous streams (S2i) comprising MA
- 111: inlet means for passing an aqueous electrolyte stream into the cathode chamber
- 112: outlet means for removing an aqueous electrolyte stream from the cathode chamber
- 211: inlet means for passing an aqueous electrolyte stream into the anode chamber
- 212: outlet means for removing an aqueous electrolyte stream from the anode chamber
- D1: degassing means for removing H₂
- D2: degassing means for removing O₂
- 50i1: first cell
- 511i1: inlet means of first cell
- 512i1: outlet means of first cell
- 50i2: second cell
- 521i1: inlet means of second cell
- 522i2: outlet means of second cell for removing the aqueous stream (A1i) comprising HA from the second cell
- 532i2: outlet means of second cell for removing an aqueous stream (S2i) comprising MA from the second cell
- 50i3: third cell
- 531i3: inlet means of third cell
- 522i3: outlet means of third cell
- 72: buffer means
- 82: buffer means
- 90: means for dividing the stream (S1)
- 91: means for passing the aqueous electrolyte stream (E12) from the outlet means (112) as stream (E21) to the inlet means (211)
- 92: means for passing the aqueous electrolyte stream (E22) from the outlet means (212) as stream (E11) to the inlet means (111)
- 93: inlet means for passing an aqueous electrolyte stream (E0) into either the means (91) and/or the means (92)
- 1110: electrodialysis device
- 1112: temperature measuring instrument
- 1114: resistance temperature sensor
- 1124: Container
- 1130: Container
- 1132: Container
- 1228: pH value
- 1230: Time
- 1232: electrical conductivity
- 1234: sodium hydroxide concentrations
- 1235: measurement value for 100 A/m²
- 1236: sodium hydroxide production rate
- 1237: measurement value for 200 A/m²
- 1238: energy consumption
- 1239: measurement value for 400 A/m²
- 1240: conversion efficiency
- 1242: Calibration
- 1244: measurement values for sodium citrate
- 1246: measurement values for sodium sulfate
- 1248: Process
- 1250: producing the aqueous stream B1 comprising MOH
- 1252: producing the aqueous stream A1 comprising HA

## Claims

1. An electrodialysis device (1110) for simultaneously producing an aqueous stream (B1) comprising an alkali metal hydroxide MOH and an aqueous stream (A1) comprising a Bronsted acid HA, said electrodialysis device (1110) comprising a cathode (10) arranged in a cathode chamber (11), an anode (20) arranged in an anode chamber (21), and a bipolar membrane stack (30) arranged between the anode chamber (21) and the cathode chamber (11);
said bipolar membrane stack (30) comprising x cell arrays (40i), i=1...x, arranged in series between the cathode chamber (11) and the anode chamber (21), wherein each cell array (40i) consists of y cells (50ik), k=1...y, and is defined by a first cation exchange membrane (41i) at the cathode side of the cell array (40i), a second cation exchange membrane (43i) at the anode side of the cell array (40i) and a bipolar membrane (42i) arranged between the first cation exchange membrane (41i) and the second cation exchange membrane (43i);
wherein a cell (50ik) which is defined by the bipolar membrane (42i) and the second cation exchange membrane (43i) comprises inlet means (511ik) for passing an aqueous stream (Wli) into said cell (50ik) and outlet means (512ik) for removing an aqueous stream (B1i) comprising MOH from said cell (50ik); wherein a cell (50ik) which is defined at its cathode side by the first cation exchange membrane (41i) comprises inlet means (521ik) for passing an aqueous stream (S1i) comprising an alkali metal salt MA of the acid HA, into said cell (50ik); wherein a cell (50ik) which is defined at its anode side by the bipolar membrane (42i) comprises outlet means (522ik) for removing an aqueous stream (A1i) comprising HA from said cell (50ik);
wherein the bipolar membrane stack (30) comprises:
- inlet means (311) for passing an aqueous stream (W1) to the membrane stack (30); and outlet means (314) for removing the aqueous stream (B1) comprising MOH from said membrane stack (30);
- inlet means (321) for passing an aqueous stream (S1) comprising MA to the membrane stack (30); and outlet means (324) for removing the aqueous stream (A1) comprising HA from said membrane stack (30);
wherein y is 2 or 3 and wherein x ≥ 1;
wherein if x≥2, the bipolar membrane stack (30) further comprises:
- dividing means (312) to divide the aqueous stream (W1) into x aqueous streams (Wli) into the cells (50ik), i=1...x; and combining means (313) for combining x aqueous streams (B1i) comprising MOH from the cells (50ik) to obtain a combined aqueous stream (B1) comprising MOH;
- dividing means (322) to divide the aqueous stream (S1) comprising MA into x aqueous streams (S1i) comprising MA into the cells (50ik), i=1...x; and combining means (323) for combining x aqueous streams (A1i) comprising HA from the cells (50ik) to obtain a combined aqueous stream (A1) comprising HA.

2. The electrodialysis device (1110) according to claim 1, wherein y is 2 and wherein each cell array (40i) consists of 2 cells (50i1) and (50i2), wherein a first cell (50i1) is defined by the bipolar membrane (42i) and the second cation exchange membrane (43i) and comprises inlet means (511i1) for passing the aqueous stream (Wli) into said cell and outlet means (512i1) for removing the aqueous stream (B1i) comprising MOH from said cell (50i1); and wherein a second cell (50i2) is defined by the first cation exchange membrane (41i) and the bipolar membrane (42i) and comprises the inlet means (521i2) for passing the aqueous stream (S1i) comprising MA into said cell (50i2) and the outlet means (522i2) for removing the aqueous stream (A1i) comprising HA from said cell (50i2).

3. The electrodialysis device (1110) according to claim 1, wherein y is 3 and wherein each cell array (40i) consists of 3 cells (50i1), (50i2) and (50i3) and further comprises an anion exchange membrane (44i) which is arranged between the first cation exchange membrane (41i) and the bipolar membrane (42i);
wherein a first cell (50i1) is defined by the bipolar membrane (42i) and the second cation exchange membrane (43i) and comprises inlet means (511i1) for passing the aqueous stream (Wli) into said cell (50i1) and outlet means (512i1) for removing the aqueous stream (B1i) comprising MOH from said cell (50i1); wherein a second cell (50i2) is defined by the first cation exchange membrane (41i) and the anion exchange membrane (44i) and comprises the inlet means (521i2) for passing the aqueous stream (S1i) comprising MA into said cell (50i2) and outlet means (532i2); and wherein a third cell (50i3) is defined by the anion exchange membrane (44i) and the bipolar membrane (42i) and comprises inlet means (531i3) and the outlet means (522i3) for removing the aqueous stream (A1i) comprising HA from said cell (50i3);
wherein the outlet means (532i2) are outlet means for removing an aqueous stream (S2i) comprising MA from the cell (50i2) and wherein the inlet means (531i3) are inlet means for passing an aqueous stream (A2i) comprising HA into the cell (50i3), the electrolysis device further comprising dividing means (315) to divide an aqueous stream (A2) comprising HA into x aqueous streams (A2i) into the cells (50ik), i=1...x; and combining means (325) for combining x aqueous streams (S2i) comprising MA from the cells (50ik) to obtain a combined aqueous stream (S2) comprising MA.

4. The electrodialysis device (1110) according to any one of claims 1 to 3, wherein x is in the range of from 1 to 200, preferably in the range of from 2 to 150, more preferably in the range of from 5 to 100, more preferably in the range of from 10 to 50; and wherein the electrode area of the bipolar membrane stack (30) is in the range of from 1 to 10,000 cm², preferably in the range of from 10 to 5,000 cm², more preferably in the range of from 20 to 1,000 cm², more preferably in the range of from 50 to 300 cm².

5. The electrodialysis device (1110) according to any one of claims 1 to 4, wherein the cathode chamber (11) comprises inlet means (111) for passing an aqueous electrolyte stream (E11) into said chamber and outlet means (112) for removing an aqueous electrolyte stream (E12) from said chamber, and wherein the anode chamber (21) comprises inlet means (211) for passing an aqueous electrolyte stream (E21) into said chamber and outlet means (212) for removing an aqueous electrolyte stream (E22) from said chamber; wherein said electrodialysis device (1110) further comprises means (91) for passing the aqueous electrolyte stream (E12) from the cathode chamber (21) from the outlet means (112) as the aqueous electrolyte stream (E21) into the anode chamber (11) to the inlet means (211), and further comprising means (92) for passing the aqueous electrolyte stream (E22) from the anode chamber (11) from the outlet means (212) as the aqueous electrolyte stream (E11) into the cathode chamber (21) to the inlet means (111), wherein either the means (91) and/or the means (92) comprise inlet means (93) for passing an aqueous electrolyte stream (E0) into either the means (91) and/or the means (92).

6. The electrodialysis device (1110) according to claim 5, further comprising degassing means (D1) for removing H₂ and optionally one or more further gases from the aqueous electrolyte stream (E12) and degassing means (D2) for removing O₂ and optionally one or more further gases from the aqueous electrolyte stream (E22), wherein the degassing means (D1) comprises a hydrogen combustion catalyst, wherein the hydrogen combustion catalyst is preferably comprised in the form of a catalyst bed and wherein the hydrogen combustion catalyst preferably comprises a platinum group metal, more preferably one or more of Pt, Rh and Pd, more preferably Pd, the platinum group metal preferably being supported in an inert support material, preferably on an oxidic material comprising one or more of Al, Ti, and Si, more preferably Al, the oxidic material more preferably comprising alumina, and wherein the degassing means (D1) preferably further comprises a temperature measuring instrument (1112) for measuring the temperature in the catalyst bed.

7. A process for simultaneously producing an aqueous stream (B1) comprising an alkali metal hydroxide MOH and an aqueous stream (A1) comprising a Bronsted acid HA, the process being carried out in the electrodialysis device (1110) according to any one of claims 1 to 6.

8. The process according to claim 7, wherein M comprises one or more of Na, K, and Li, preferably one or more of Na and K, more preferably Na, wherein more preferably, M is Na.

9. The process according to claim 7 or 8, wherein the acid HA has one or more pKa values wherein at least one pKa value is in the range of from 2 to 7, wherein, if the acid HA has two or more pKa values, at least one, preferably at least 2 pKa values are in the range of from 2 to 7, wherein the salt MA preferably has a calcium stability constant pCa of at least 5, and wherein the salt MA is present in the aqueous stream (S1) in an amount in the range of from 20 to 100 %, preferably in the range of from 75 to 100 %, more preferably in the range of from 85 to 100 %, more preferably in the range of from 95 to 100 % of its solubility at 5 °C.

10. The process according to any one of claims 7 to 9, wherein the at least one salt MA comprises, specifically consists of, at least one salt selected from the group consisting of a citrate; a dicarboxymethyl alaninate (MGDA) such as trisodium dicarboxymethyl alaninate (Na3-MGDA); a N,N-bis(carboxymethyl)-L-glutamate (GLDA) such as tetrasodium N,N-bis(carboxymethyl)-L-glutamate (Na4-GLDA); an iminodisuccinate (IDS) such as tetrasodium iminodisuccinate (Na4-IDS); a triphosphate such as sodium triphosphate (STP); a salt of ethylenediaminetetraacetic acid (EDTA) such as tetrasodium ethylenediaminetetraacetic acid (Na4-EDTA); a polyacrylate; a lactate; an oxalate; a gluconate; a sulphate; a carbonate and a hydrogen carbonate.

11. The process according to any one of claims 7 to 10, wherein from 1 kg of the alkali metal salt MA, M preferably being Na, at least 350 g, preferably at least 400 g MOH, preferably NaOH, are produced.

12. The process according to any one of claims 7 to 11, wherein the cross flow velocity of any one of MA, HA and MOH in the electrodialysis device is in the range of from 0.01 to 5 cm/s, preferably in the range of from 0.1 to 3 cm/s, more preferably in the range of from 0.05 to 1 cm/s, and wherein the electric current density in the electrodialysis device is in the range of from 10 to 1,500 A/m², preferably in the range of from 100 to 1,000 A/m², more preferably in the range of from 200 to 400 A/m².

13. The process according to any one of claims 7 to 12, wherein the aqueous stream (B1) has a pH of at least 12, preferably of at least 12.5, more preferably of at least 13, more preferably of at least 13.5.

14. The process according to any one of claims 7 to 13, wherein y is 2 and the process is carried out in the electrodialysis device (1110) according to claim 2, wherein the aqueous stream (B1) comprising MOH removed from the membrane stack (30) is not recirculated into the membrane stack (30), and wherein the aqueous stream (A1) comprising HA removed from the membrane stack (30) is at least partially recirculated into the membrane stack (30), preferably via stream (S1).

15. The process according to any one of claims 7 to 13, wherein y is 3 and the process is carried out in the electrodialysis device (1110) according to claim 3, wherein the aqueous stream (S2) comprising MA removed from the membrane stack (30) is at least partially recirculated into the membrane stack (30), preferably via the aqueous stream (S1), wherein the aqueous stream (B1) comprising MOH removed from the membrane stack (30) is not recirculated into the membrane stack (30), and wherein the aqueous stream (A1) comprising HA removed from the membrane stack (30) is not recirculated into the membrane stack (30).

16. The process according to any one of claims 7 to 15, wherein the aqueous electrolyte stream (E12) comprises one or more of NaOH, H₂SO₄, NaNO₃, and at least one of the at least one salt MA, preferably one or more of NaOH, H₂SO₄, NaNO₃, Na₂SO₄, and trisodium citrate, and wherein the cross flow velocity of the electrolyte stream (E12) in the electrodialysis device (1110) is in the range of from 0.1 to 20 cm/s, preferably in the range of from 0.2 to 5 cm/s, more preferably in the range of from 0.5 to 1 cm/s.
